(19)

Europäisches
Patentamt

European
Patent Office

Office européen
des brevets

(11) **EP 4 773 582 A1**

(12) **EUROPEAN PATENT APPLICATION**

(43) Date of publication:
08.07.2026 Bulletin 2026/28

(21) Application number: 26150005.2

(22) Date of filing: 02.01.2026

(51) International Patent Classification (IPC):
*H04L 69/22* (2022.01)    *H04L 69/324* (2022.01)
*H04W 4/70* (2018.01)    *H04W 68/00* (2009.01)
*H04W 80/02* (2009.01)    *H04W 72/23* (2023.01)

(52) Cooperative Patent Classification (CPC):
**H04W 4/70; H04L 69/22; H04L 69/324;
H04W 68/005; H04W 72/23; H04W 80/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 02.01.2025 KR 20250000562
09.09.2025 KR 20250128648
18.12.2025 KR 20250203375

(71) Applicant: **KT Corporation
Seongnam-si, Gyeonggi-do 13606 (KR)**

(72) Inventor: **HONG, Sung-pyo
13606 Seongnam-si, Gyeonggi-do (KR)**

(74) Representative: **BCKIP Part mbB
MK1
Landsbergerstraße 98, 3.Stock
80339 München (DE)**

(54) **METHOD AND DEVICE FOR PROCESSING MAC MESSAGES**

(57)    Provided are a method and device for processing a medium access control (MAC) message in a wireless communication system. The device receives a first MAC message for paging, and after receiving the first MAC message, transmits a second MAC message including device to reader (D2R) upper layer data. Further, after transmitting the second MAC message, the device receives a third MAC message including reader to device (R2D) upper layer data. Here, the first MAC message includes device identification information and information indicating presence of the device identification information, and the third MAC message includes information indicating presence of the R2D upper layer data.

EP 4 773 582 A1

**Description**

CROSS-REFERENCE TO RELATED THE APPLICATION

This application is based on and claims priority on Patent Application No. 10-2025-0000562 filed on Jan. 2, 2024, No. 10-2025-0128648 filed on Sep. 9, 2025 and No. 10-2025-0203375 filed on Dec. 18, 2025 in the Korean Intellectual Property Office, the disclosures of which are incorporated by reference herein in their entirety.

BACKGROUND

Technical Field

The present disclosure relates to wireless communication applicable to 5G NR, 5G-Advanced and 6G.

Description of the Related Art

With the increase in the number of communication devices, there is a consequent rise in communication traffic that needs to be managed. To handle this increased communication traffic, a next generation 5G system, which is an enhanced mobile broadband communication system compared to the exiting LTE system, has become necessary. Such a next generation 5G system has been developed based on scenarios classified as Enhanced Mobile BroadBand (eMBB), Ultra-reliable and low-latency communication (URLLC), Massive Machine-Type Communications (mMTC), and the like.
eMBB, URLLC, and mMTC represent next generation mobile communication scenarios. eMBB is characterized by high spectral efficiency, high user experienced data rate, high peak data. URLLC is characterized by ultra-reliability, ultra-low latency, ultra-high availability (e.g., vehicle-to-everything (V2X), Emergency Service, Remote Control). mMTC is characterized by low cost, low energy consumption, short packet transmission, and massive connectivity (e.g., Internet of Things (IoT)).

SUMMARY

The disclosure is to provide a method and apparatus for efficiently processing medium access control (MAC) messages in a wireless communication system.
According to an embodiment, a method of a device may be provided for processing a medium access control (MAC) messages in a wireless communication system. The method of the device may include receiving a first MAC message for paging, after receiving the first MAC message, transmitting a second MAC message including device to reader (D2R) upper layer data, and after transmitting the second MAC message, receiving a third MAC message including reader to device (R2D) upper layer data. Here, the first MAC message includes device identification information and information indicating presence of the device identification information, and the third MAC message includes information indicating presence of the R2D upper layer data.
According to another embodiment, a device may be provided for processing data in a wireless communication system. The terminal may include at least one processor; and at least one memory configured to store instructions and operably electrically connectable to the at least one processor, wherein operations performed based on the instructions executed by the at least one processor include: receiving a first MAC message for paging, after receiving the first MAC message, transmitting a second MAC message including device to reader (D2R) upper layer data, and after transmitting the second MAC message, receiving a third MAC message including reader to device (R2D) upper layer data. Here, the first MAC message includes device identification information and information indicating presence of the device identification information, and the third MAC message includes information indicating presence of the R2D upper layer data.
The first MAC message may further include D2R scheduling information. Here, the first MAC message may include, in an order, information indicating presence of the device identification information, the device identification information, and the D2R scheduling information.
The first MAC message may further include a security parameter and information indicating presence of the security parameter. Here, the first MAC message may include, in an order, the information indicating presence of the security parameter, the security parameter, the information indicating presence of the device identification information, and the device identification information.
The information indicating presence of the R2D upper layer data may be 1 bit. Further, the third MAC message may have different MAC protocol data unit (PDU) formats according to a setting value of the information indicating presence of the R2D upper layer data.
Meanwhile, the third MAC message may further include an access stratum identifier (AS ID) and D2R scheduling information. Here, the third MAC message may include, in an order, the AS ID, the D2R scheduling information, the information indicating presence of the R2D upper layer data, and the R2D upper layer data.

At least one of the first MAC message and the third MAC message may further include transport block size information. Here, the transport block size information may be 7 bits.

BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIGS. 7A to 7B illustrate examples of connectivity topologies for an ambient IoT network and a device.
FIG. 8 illustrates an example of a procedure for an A-IoT inventory service.
FIG. 9 illustrates an example of an access stratum (AS) procedure between an A-IoT device and a reader.
FIGS. 10A to 10B illustrate A-IoT access procedures to which one embodiment of the present specification may be applied.
FIG. 11 is a block diagram showing apparatuses according to an embodiment of the disclosure.
FIG. 12 is a block diagram showing a terminal according to an embodiment of the disclosure.
FIG. 13 is a block diagram of a processor in accordance with an embodiment.
FIG. 14 is a detailed block diagram of a transceiver of a first apparatus shown in FIG. 11 or a transceiving unit of an apparatus shown in FIG. 12.

DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

<Wireless **Communication** System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

[Table 1]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

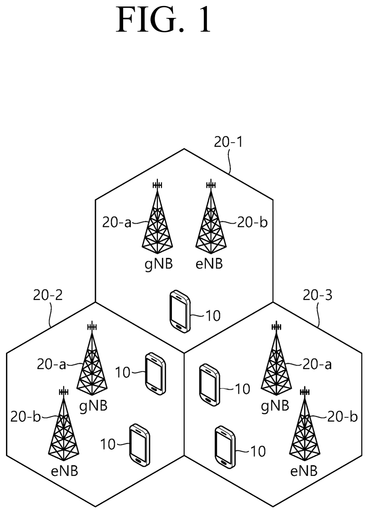

**FIG. 1 is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

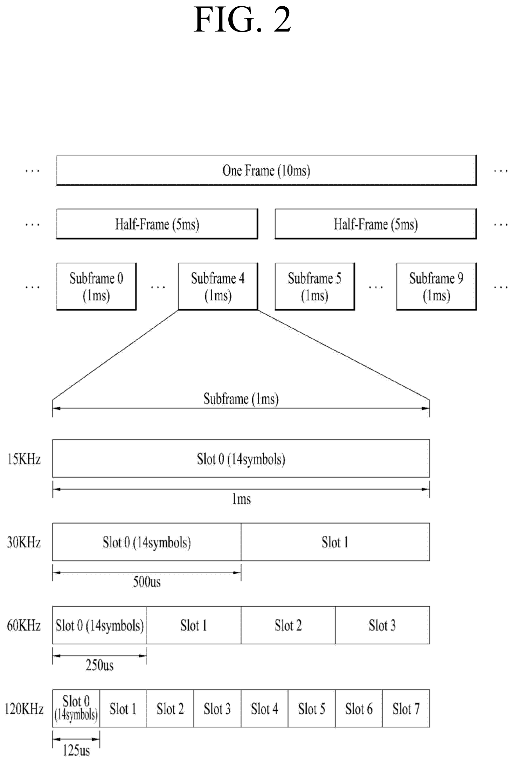

**FIG. 2 is a diagram illustrating a structure of a radio frame used in new radio** (NR).

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

**<Support of Various Numerologies>**

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by $\mu$).

[Table 2]

| $\mu$ | $\Delta f = 2^{\mu} \cdot 15$ [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot ($N^{slot}_{symb}$), the number of slots per frame ($N^{frame,\mu}_{slot}$), and the number of slots per subframe ($N^{subframe,\mu}_{slot}$) according to each numerology expressed by $\mu$ in the case of a normal CP.

[Table 3]

| $\mu$ | $\Delta f = 2^{\mu} \cdot 15$ [kHz] | $N^{slot}_{symb}$ | $N^{frame,\mu}_{slot}$ | $N^{subframe,\mu}_{slot}$ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot ($N^{slot}_{symb}$), the number of slots per frame ($N^{frame,\mu}_{slot}$), and the number of slots per subframe ($N^{subframe,\mu}_{slot}$) of a numerology represented by $\mu$ in the case of an extended CP.

[Table 4]

| $\mu$ | SCS ($15*2^u$) | $N^{slot}_{symb}$ | $N^{frame,\mu}_{slot}$ | $N^{subframe,\mu}_{slot}$ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

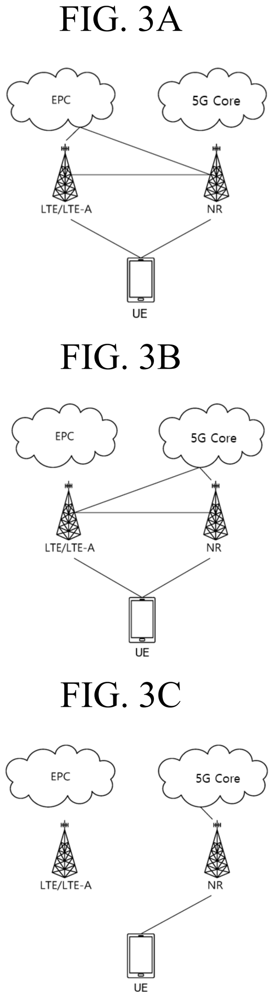

FIGS. 3A to 3C illustrate exemplary architectures for a wireless communication service.

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

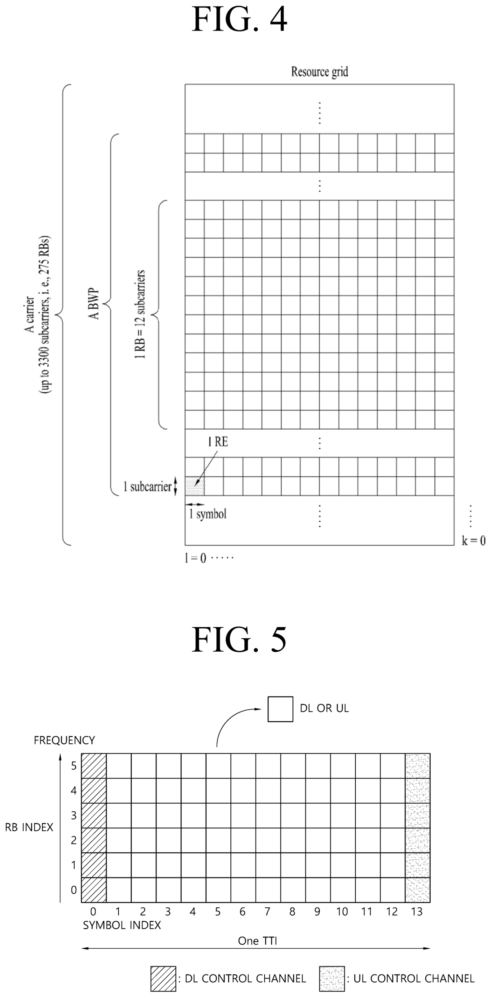

FIG. 4 illustrates a slot structure of an NR frame.

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

FIG. 5 shows an example of a subframe type in NR.

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

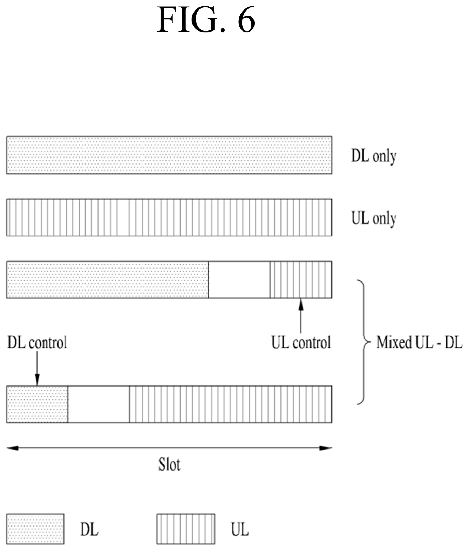

FIG. 6 illustrates a structure of a self-contained slot.

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.

1. DL only configuration
2. UL only configuration
3. Mixed UL-DL configuration

– DL region + Guard Period (GP) + UL control region

– DL control region + GP + UL region

DL region: (i) DL data region, (ii) DL control region + DL data region
UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some symbols within a subframe that transition from DL to UL mode may be configured as the GP.

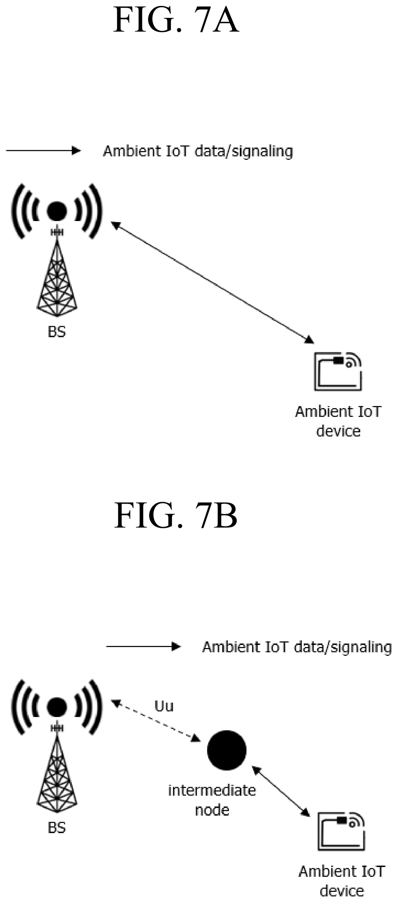

**FIGS. 7A to 7B illustrate examples of connectivity topologies for an ambient IoT network and a device.**

An ambient Internet of Things (ambient Internet of Things or ambient power-enabled Internet of Things, A-IoT/AIoT) device is an IoT device powered by energy harvesting and having no battery or having limited energy storage capability (for example, using a capacitor). For convenience of description, an AIoT device may hereinafter be referred to as a device. This is merely for convenience of description, and the name may be changed to any other term.

Energy is provided through energy harvesting from radio waves, light, motion, heat, or other suitable power sources. Energy harvesting may be continuous (for example, by vibration) or may occur intermittently. Accordingly, it cannot be assumed that an AIoT device always has power available for data transmission and reception.

An AIoT device needs to be designed to have lower complexity, smaller size, reduced capability, and lower power consumption than previously defined 3GPP IoT terminals/devices (for example, NB-IoT (Narrowband Internet of Things) or eMTC (enhanced Machine Type Communication) devices). An AIoT device may be designed to have a lifetime of more than 10 years without maintenance. Accordingly, AIoT devices may replace existing 3GPP IoT devices or support various use cases (for example, inventory, sensors, positioning, and commands) that cannot be supported by existing 3GPP IoT devices.

Functions and procedures for supporting ambient IoT use cases may be defined as AIoT services (for example, an inventory service and a command service). For example, a main purpose of the inventory service is to search for goods (for example, boxes, containers, packages, or tools) present in a specific area. When a request is transmitted within a network for a specific area, AIoT devices attached to such goods report identifiers associated with the goods, and additional information such as status, measurement results, and/or location may be added by the AIoT devices and/or an AIoT RAN (Radio Access Network)/reader. Through the inventory service, AIoT devices within a predetermined range of a specific reader may be discovered and/or tracked.

A command service represents a procedure for executing commands to AIoT devices located in a specific area. The commands may include, for example, read, write, disable, and/or enable services.

- Read: a request to read information from an AIoT device.
- Write: a request to write information to an AIoT device.
- Disable: a request to permanently or temporarily disable an RF transmission capability of an AIoT device.
- Enable: a request to enable an AIoT device that has been temporarily disabled.

Connectivity topologies such as those shown in FIGS. 7A to 7B may be defined for an ambient Internet of Things (AIoT) network and devices. In FIG. 7A, a BS represents an ambient IoT Radio Access Network (RAN). The AIoT RAN represents a node that performs specific functions for AIoT as part of a functional split between a Radio Access Network (RAN) and a Core Network (CN), for example, a RAN node function that includes control of A-IoT radio resources used toward an A-IoT device. The AIoT RAN may serve one or more AIoT readers. An AIoT reader represents a reader that terminates an AIoT protocol with an AIoT device. For convenience of description, the node may hereinafter be referred to as an AIoT RAN (or an AIoT reader). This is merely for convenience of description, and the node may be denoted by any other term, such as an AIoT RAN reader, an AIoT base station, or an AIoT BS reader.

In all of these topologies, a carrier may be provided to an AIoT device from another node inside or outside the topology. Links in each topology may be bidirectional or unidirectional. In FIG. 7A, an AIoT device communicates directly and bidirectionally with a base station. Communication between the base station and the AIoT device may include AIoT data and/or signaling. A base station that transmits to the AIoT device and a base station that receives from the AIoT device may be the same base station or may be different base stations.

In FIG. 7B, an AIoT device performs bidirectional communication with an AIoT RAN via an intermediate node/assisting node/assisting UE. In this topology, the intermediate node/assisting node/assisting UE may be a relay, an integrated access and backhaul (IAB) node, a UE, a repeater, or the like, which is capable of ambient IoT functions and/or services. For convenience of description, the node may hereinafter be referred to as a UE reader. This is merely for convenience of description, and the node may be denoted by any other term, such as a UE connected to or associated with an AIoT-enabled RAN, an AIoT-enabled RAN/reader, an AIoT reader, or an AIoT UE reader.

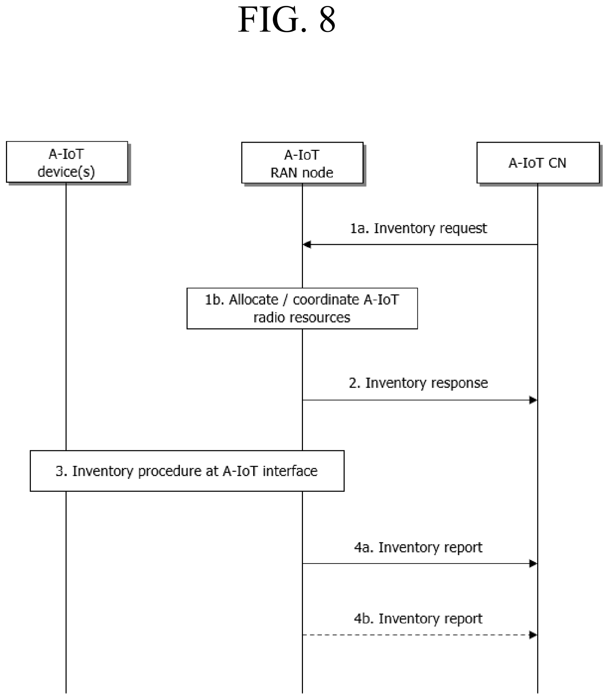

**FIG. 8 illustrates an example of a procedure for an A-IoT inventory service.**

With reference to FIG. 8, a procedure for an AIoT inventory service is described below.

1a. The A-IoT CN sends an inventory request message to an A-IoT RAN node.
1b. The A-IoT RAN node allocates and coordinates usage of A-IoT radio resources.
2. The A-IoT RAN node sends an inventory response message to the A-IoT CN.
3. The A-IoT RAN node performs an inventory procedure toward one or more A-IoT devices over an A-IoT radio interface.
4a/4b. After receiving inventory results from the one or more A-IoT devices, the A-IoT RAN node may transmit one or more inventory reports to the A-IoT CN, the inventory reports including the received inventory results.

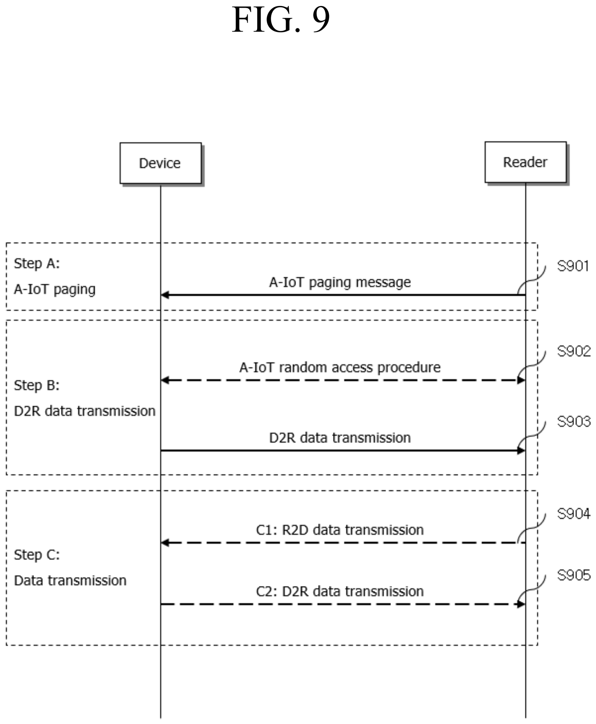

**FIG. 9 illustrates an example of an access stratum (AS) procedure between an A-IoT device and a reader.**

With reference to FIG. 9, an overall access stratum (AS) procedure between an ambient Internet of Things (A-IoT) device and a reader is described below.

Step A: A-IoT Paging (S901)

Based on a service request, the reader transmits an A-IoT paging message indicating one or more devices that are required to respond. In this case, the A-IoT paging message may be used interchangeably with an initial trigger message.

Step B: D2R (Device-to-Reader) Data Transmission (S902-S903)

One or more A-IoT devices triggered by the paging perform transmission of a device identity (ID) to the reader by performing an A-IoT random access procedure or without performing the A-IoT random access procedure. Thereafter, D2R data is transmitted to the reader.

Step C1: R2D (Reader-to-Device) Data Transmission (S904)

A possible R2D data transmission is performed, for example, for transmitting a command.

Step C2: D2R Data Transmission (S905)

A possible D2R data transmission is performed, for example, for transmitting a corresponding response to the command.

As described above, although high-level procedures for providing an inventory service or a command service have been defined, detailed operations between an AIoT device and an AIoT RAN/reader for supporting AIoT services have not been specified, and thus AIoT services cannot be implemented. In particular, to support such services, MAC (Medium Access Control) messages (for example, MAC protocol data unit (PDU) formats) for enabling an AIoT device to effectively support corresponding AIoT operations need to be defined; however, no concrete techniques have been provided.

In AIoT devices configured to support lower complexity, smaller size, reduced capability, and lower power consumption compared to existing 3GPP LPWA (Low-Power Wide-Area) IoT, MAC message formats (for example, MAC protocol data unit (PDU) formats) for supporting corresponding AIoT operations have not been defined.

To address these problems, the present disclosure proposes MAC layer operations between an AIoT device and an AIoT RAN/reader, that is, a MAC message processing method and an apparatus therefor, for AIoT devices supporting lower complexity, smaller size, reduced capability, and lower power consumption than existing 3GPP LPWA IoT.

Hereinafter, data transmission and reception methods based on 5GS (Fifth Generation System) and NR technologies are described in detail. However, this is merely for convenience of description, and the present disclosure may be applied based on any system or any radio access technology (for example, 6G). Embodiments described in the present disclosure may refer to information elements and operation details specified in NR/5GS standards (for example, TS 38.321 as an NR MAC specification, TS 38.331 as an NR RRC specification, and TS 23.501 as a system architecture specification). Even if definitions of such information elements and related terminal operations are not described in the present specification, corresponding contents specified in standard specifications as well-known technologies may be included in the present disclosure.

Any function described below may be defined as an individual terminal capability (for example, a UE radio capability or a UE core network capability) and may be transmitted by a terminal to a base station or a core network entity (for example, an AMF (Access and Mobility Management Function), an SMF (Session Management Function), or an AIoTNF (Ambient IoT Network Function)) through corresponding signaling. Alternatively, multiple functions may be combined or aggregated and defined as a terminal capability, and may be transmitted by the terminal to the base station or the core network entity through corresponding signaling. Herein, an AIoTF (Ambient IoT Function or Ambient IoT Network Function) represents a network function for providing management and control of AIoT services and AIoT operations. This is merely for convenience of description, and the name may be changed to any other term. The AIoTF may select an AIoT RAN node (or a UE reader). The AIoTF may receive an AIoT service request from an application function or an application server and trigger an AIoT RAN/reader (or an AIoT UE reader) to perform AIoT device operations and AIoT service operations. The AIoTF may collect AIoT service operation results from the AIoT RAN node (or the AIoT UE reader) and transmit the collected results to the application function or the application server.

An ambient IoT device may be classified and defined into at least one device type or category according to at least one supported capability or a combination of at least one capability. For example, according to an energy storage capacity, devices may be classified into a device having no energy storage, a device having an energy storage capacity up to a specific value (up to E1 Joules), and a device having an energy storage capacity up to another specific value (up to E2 Joules, where E2 > E1). As another example, devices may be classified into a device having no energy storage and no independent signal generation or amplification (for example, backscatter transmission) (hereinafter referred to as Device A for convenience of description), a device having an energy storage unit but no independent signal generation (for example, backscatter transmission) (hereinafter referred to as Device B for convenience of description), wherein use of stored energy in Device B may include amplification of a reflected signal, and a device having an energy storage unit and independent signal generation (for example, active RF components for transmission) (hereinafter referred to as Device C for convenience of description). As another example, devices may be classified into a device having approximately 1 $\mu$W peak power consumption, having energy storage, having no amplification in both downlink (DL) and uplink (UL) within the device, and performing uplink transmission by backscattering on an externally provided carrier wave (hereinafter referred to as Device 1 for convenience of description); a device having peak power consumption of less than or equal to a few hundred $\mu$W, having energy storage, having amplification in both DL and UL within the device, and performing uplink transmission by backscattering on an externally provided carrier wave (hereinafter referred to as Device 2a for convenience of description); and a device having peak power consumption of less than or equal to a few hundred $\mu$W, having energy storage, having amplification in both DL and UL within the device, and performing uplink transmission using a carrier wave internally generated by the device (hereinafter referred to as Device 2b for convenience of description).

An AIoT RAN/reader/base station/UE reader or an AIoTF may transmit, indicate, or configure information or messages to an AIoT device for instructing enabling, activation, allowance, support, and/or configuration of any function or any combination of functions described below. For example, such information or messages may be transmitted from the AIoTF to the AIoT device through an AIoT NAS message or container. Alternatively, such information or messages may be transmitted to the AIoT device through a dedicated MAC PDU by an AIoT RAN/reader/base station/UE reader.

An AIoT RAN/reader/base station/UE reader or an AIoTF may transmit, indicate, or configure information or messages to an AIoT device for disabling, deactivating, restricting, and/or controlling any function or any combination of functions described below. For example, a prohibit, suspend, or deactivate timer for operation of a corresponding function may be indicated. The timer may be started or restarted at initiation of the corresponding function or before or after initiation of the corresponding function. While the timer is running, the device may be disabled, deactivated, restricted, or controlled so as not to initiate or perform the corresponding function.

Embodiments and corresponding functions described below may be performed independently. Alternatively, the embodiments and functions described below may be arbitrarily combined or aggregated and implemented, and it is apparent that such implementations are also included within the scope of the present invention.

Any information described below may be traffic characteristic information obtained, calculated, or derived statistically or empirically by a terminal or a network (for example, arbitrary statistics or statistical values such as an expected value/average, variance, standard deviation, minimum, or maximum). Accordingly, any information included in the present specification may represent at least one of an average (expected value), a minimum, a maximum, or a standard deviation. This is merely for convenience of description, and all information in the present specification may be used as statistical information. Any information described below may be pre-configured in a device or a network, or may be provisioned through OAM (Operations, Administration, and Maintenance), an application server, an application function, AIoT, UDM (Unified Data Management), and/or ADM (AIoT Data Management).

Hereinafter, a physical channel for R2D (Reader to Device) data transmission is referred to as a PRDCH (Physical Reader to Device Channel), a physical channel for D2R (Device to Reader) data transmission is referred to as a PDRCH (Physical Device to Reader Channel), and an interface/link between a reader and a device is referred to as an RD interface/link (for example, an AIoT radio interface). This is merely for convenience of description, and may be replaced with any other term.

Hereinafter, RD/DR link resource and scheduling information may include at least one of:

a start time/subframe/slot/symbol/reference time/arbitrary AIoT device unit time (for RD/DR link communication);
a start time/subframe/slot/symbol/reference time/arbitrary AIoT device unit time offset (for RD/DR link communication);
a start time/subframe/slot/symbol based on a specific reference time/point (for example, R2D data reception, start of R2D data reception, end of R2D data reception, or a serving base station/cell-specific reference time serving the corresponding reader);
a start time/subframe/slot/symbol offset based on a specific reference time (for RD/DR link communication);
a duration (for RD/DR link communication);
a transmission occasion (for an RD/DR link);
a transmission period (for an RD/DR link);
available time slots;
an available time-slot range;
a maximum number of time slots;
an uplink/downlink start time/subframe/slot/symbol and/or a start time/subframe/slot/symbol offset of an associated base station or assisting terminal for indicating an RD link start time;
frequency-domain information of an RD link;
an RD link subchannel number/index;
a DR link frequency offset;
an RD/DR link MCS;
an RD/DR link transport block size;
a communication range;
location information;
a priority;
a number of retransmissions for an RD/DR link; and
a validity period/time and/or a validity criterion (for RD/DR link communication).

AIoT MAC PDU Configuration

When constructing a MAC header, the header may be constructed by considering the operations to be processed preferentially by the AIoT device. This configuration may reduce the complexity of the AIoT device. The AIoT device receives an R2D message via the PRDCH in the physical layer and classifies and processes the corresponding MAC PDU. Accordingly, it is desirable to define the order of various fields/information included in the MAC PDU header.

For example, if an AIoT device supports multiplexing for one or more MAC SDUs (data PDUs received from an upper layer) or MAC CE (control element) (a control message/data generated in the MAC layer, MAC layer's own data, a MAC PDU composed of only a MAC header, which for convenience of explanation is denoted as MAC CE but may be replaced by another name (e.g., MAC message)) based on scheduling information received from an AIoT RAN/reader in the MAC layer (and/or according to scheduling information determined in the MAC layer of the AIoT device), a single MAC PDU may include one or more MAC sub-PDUs. Each MAC sub-PDU may consist of only one MAC sub-header. Each MAC sub-PDU may include one MAC sub-header and one MAC SDU. Each MAC sub-PDU may include one MAC sub-header and one MAC CE.

As another example, for simple processing, the AIoT device and/or AIoT RAN/reader may not support multiplexing in the MAC layer. One MAC PDU may include one MAC header and one MAC SDU. One MAC PDU may be configured as a MAC PDU having only one MAC header. This allows the AIoT device and/or AIoT RAN/reader to support signaling of the MAC layer without upper layer data.

As another example, one MAC PDU may be configured as a MAC PDU having only one MAC header. For example, an R2D/D2R MAC PDU for indicating acknowledgment of D2R/R2D data transmission may be defined. The MAC PDU may distinguish the MAC message type by including only information for distinguishing the MAC PDU/message type (and/or information for distinguishing the D2R/R2D data transmission). In this way, a MAC PDU including only one field within one MAC header may be defined. Alternatively, a MAC PDU including a plurality of fields within one MAC header may be defined.

As another example, an AIoT device and/or an AIoT RAN/reader may be configured such that in the MAC layer, a MAC PDU having only one MAC header and a MAC PDU having one MAC SDU are configured as one MAC PDU.

As another example, an AIoT device and/or an AIoT RAN/reader may include information in the MAC header for indicating the presence/inclusion of specific upper layer data in the MAC layer. Here, the upper layer data may represent at least one of an AIoT NAS message/PDU between an AIoT device and an AIoTF, data used in an AIoT NAS layer (e.g., AIoT device identification information, parameters for security processing (e.g., cyphering, integrity protection, and/or privacy protection) of an AIoT device identifier (e.g., security key, key identification information, fresh value, counter, token, verification value/result value/response value (RES: Result /XRES: Expected Result)), a random parameter (RAND), an algorithm, and/or device credential/profile), and AIoT application/data layer data between the AIoT device and an AIoT application function/application server. The AIoT application/data layer data may be included in an AIoT NAS message or signaling which triggers the message and transmitted.

This allows a MAC message/PDU for a MAC layer procedure/operation for a specific purpose to be configured as one MAC PDU having only one MAC header without upper layer data (the corresponding MAC SDU), or to be configured as one MAC PDU including the upper layer data (the corresponding MAC SDU) in the one MAC header. For example, upper layer data may be included in an R2D/D2R MAC message between an AIoT device and a RAN/reader. For example, after the transmission of D2R data in Step B (D2R data transmission), the RAN/reader may transmit an R2D MAC message including upper layer data to the AIoT device in Step C1 (Possible R2D data transmission (e.g., for sending the command)). Thereafter, an R2D MAC message transmitted by the corresponding reader to the corresponding device may indicate that upper layer data is included in the MAC message through a 1-bit field. For example, for an R2D MAC message having the same R2D message type value, when an upper layer data field is included, the 1-bit field may be set to a specific value (1) and transmitted. Otherwise, it may be set to 0 and an R2D MAC message not including the upper layer data field may be transmitted to the AIoT device. If the upper layer data field is included, the AIoT device may forward the upper layer data to an upper layer. Accordingly, the AIoT device may initiate a subsequent D2R message transmission. Otherwise, it may perform D2R message transmission/retransmission for a previously transmitted D2R message.

As another example, a MAC PDU may be configured as a bit string being byte-aligned (a multiple of 8 bits) in length. This may reduce the number of bits included in a scheduling indication compared to a bit unit. For example, in typical AIoT use cases, the maximum number of bits is approximately 1000 bits (128 bytes). If byte alignment is supported, even without defining a TBS table, 128 different values may be distinguished with 7 bits, so even if all bytes are distinguished and signaled, the transport block size may be indicated within 7 bits. An R2D MAC message transmitted by a RAN/reader to an AIoT device may include a 7-bit length/transport block size field to indicate the variable length of the R2D message.

As another example, one MAC PDU may be configured as any bit string which is not byte-aligned (a multiple of 8 bits) in length. This may prevent adding unnecessary padding bits. As described above, since the maximum number of bits in AIoT use cases is approximately 1000 bits (128 bytes), the number of bits for distinguishing them when using MCS on a bit-by-bit basis may not increase compared to the 5 bits of NR.

As another example, one MAC SDU may include an NAS PDU/message/container between an AIoT device and an AIoTF, an AIoT data/application PDU/container between an AIoT device and an AIoT application server/application function, and/or an NAS PDU including an AIoT data/application PDU/container and an NAS message/container between an AIoT device and an AIoTF.

As another example, a MAC PDU may include information in a MAC header for indicating whether an NAS PDU/message/container/parameter is included.

As another example, one MAC SDU may be configured as a bit string being byte-aligned (e.g., a multiple of 8 bits) in length. Alternatively, a MAC PDU including the MAC SDU may be configured as any bit string that is not byte-aligned (e.g., not a multiple of 8 bits).

As another example, one MAC SDU may be configured as any bit string which is not byte-aligned (e.g., a multiple of 8 bits) in length. Alternatively, a MAC PDU including the MAC SDU may be configured as any bit string which is not byte-aligned (e.g., not a multiple of 8 bits).

As another example, a MAC header may support an R2D/D2R MAC header format having a fixed size. The MAC header (or a field for distinguishing the MAC header format (e.g., header type or MAC PDU type)) may allow data to be transmitted and received without a length field. For example, a MAC PDU composed of only a MAC header without a MAC SDU may have a fixed size.

As another example, a MAC header may support a D2R MAC header format having a fixed-size MAC SDU. The MAC header (or a field for distinguishing the MAC header format (e.g., header type or MAC PDU type)) may allow data to be transmitted and received without a length field. An AIoT device, when generating a D2R message/data based on scheduling information (e.g., access occasion, frequency band/sub-band/resource/resource set, transport block size, modulation, coding, etc.) included in a (most recent/previous) R2D message received from an AIoT RAN/reader and/or based on scheduling information determined in the MAC layer of the AIoT device, may generate the D2R message/data by setting the transport block size to a fixed length based on the received scheduling information.

As another example, a MAC header may support a MAC header format having a variable-size MAC SDU. The MAC header (or a field for distinguishing the MAC header format (e.g., header type or MAC PDU type)) may distinguish and transmit/receive the corresponding upper layer data through a length field. For example, an R2D MAC PDU sent by an AIoT RAN/reader to an AIoT device may allow the AIoT device to process it considering the size of the MAC PDU to be received through a length field. For example, an R2D MAC message transmitted by a RAN/reader to an AIoT device may include a 7-bit length/transport block size field to indicate the variable length of the R2D message.

As another example, a MAC header may support a MAC header format having a variable size. The length of the MAC header of the MAC PDU may vary through a field included in the MAC header (e.g., information for indicating the inclusion of a specific field in a subsequent/following field in the header, a value set in the corresponding field) (or through a field for distinguishing the MAC header format (e.g., header type or MAC PDU type)). For example, an R2D/D2R MAC message may support a MAC header having different MAC header fields through information indicating the presence/inclusion of specific upper layer data. For example, a paging MAC message having a field for indicating the presence/inclusion of AIoT device identification information may be classified into a MAC message format including an AIoT device identification information field and a MAC message format not including an AIoT device identification information field, according to the setting value of the field for indicating the presence/inclusion of AIoT device identification information. As another example, an R2D MAC message having a field for indicating the presence/inclusion of upper layer data may be classified into a MAC message format including an upper layer data field and a MAC message format not including an upper layer data field, according to the setting value of the field for indicating the presence/inclusion of upper layer data.

As another example, one MAC SDU may have a variable size. The size of the MAC SDU may be indicated through a length field in an NAS message/container included in the MAC SDU.

AIoT MAC Header Configuration

When an AIoT device transmits/receives an AIoT MAC PDU in the MAC layer, it is desirable for the MAC PDU to be configured considering the priority of fields within the MAC header of the MAC PDU to facilitate processing in the AIoT device. Accordingly, the following methods may be used.

For example, if an AIoT device supports multiplexing for one or more MAC SDUs (data PDUs received from an upper layer) or MAC CEs (control element, a control message/data generated in the MAC layer, MAC layer's own data, a MAC PDU composed of only a MAC header including one or more fields, which for convenience of explanation is denoted as MAC CE but may be replaced by another name (e.g., MAC message)) in the MAC layer, within one MAC PDU, a MAC CE may be configured first (e.g., on the left), considering it as a priority/more important than a MAC PDU including a MAC SDU.

The bit order of each parameter field within a MAC PDU is represented with the first and most significant bit in the leftmost bit and the last and least significant bit in the rightmost bit.

As another example (if the AIoT device and/or AIoT RAN/reader does not support multiplexing in the MAC layer), the MAC PDU may be configured with the MAC header first/on the left, considering it as a priority/more important than the MAC SDU.

As another example, when an AIoT device and/or an AIoT RAN/reader configures a MAC PDU having only one MAC header and one MAC SDU as one MAC PDU in the MAC layer, the MAC PDU having only one MAC header may be configured first/on the left, considering it as a priority/more important than one MAC SDU in one MAC PDU.

As another example, a MAC header included in an R2D/D2R MAC PDU between an AIoT device and an AIoT RAN/reader may, if present, include at least one of information for supporting forward compatibility for the MAC PDU (e.g., protocol version/release/format type/service type version), information for distinguishing the MAC PDU type (e.g., PDU-type/data type identification information/Control-PDU-type, logical channel identification information, AIoT message/-service type information for the MAC PDU, total/group/multiple/single device distinction information, and/or information for indicating success/failure of reception of a D2R message/data/segment transmitted by an AIoT device), information for identifying the AIoT device (e.g., information/field for indicating whether AIoT device identification information is included, AIoT device identification information, information for indicating whether an AS ID (Access Stratum Identifier) is included, AS ID, group device identification information, device identification information for multiple devices, device identification information for a single device), information for supporting efficient AIoT message/signaling/data transmission/reception (e.g., information/identification information for an AIoT device to determine whether to skip transmission of a response to the paging message, information for identifying/distinguishing one AIoT service request/trigger requested by one core network (correlation/identification information for one AIoT service request received from the core network), or information for indicating success/failure of reception of a D2R message/data/segment transmitted by an AIoT device), scheduling information (for a subsequent D2R message/data of the R2D message, in the case of an R2D message), and information for indicating the presence of upper layer data/NAS message/container. The order of the information/fields in the above example is an example, and an order different from this order may also be included within the scope of the present disclosure.

As an example, an AIoT paging message may include information for distinguishing the R2D MAC message type as the highest priority. The AIoT paging message may include information for indicating whether AIoT device identification information included in the paging message is included with higher priority than D2R scheduling information. An AIoT device may attempt to transmit a response when a match is found, considering the matching of the identification information of the AIoT device. Therefore, the information for indicating whether AIoT device identification information is included and the AIoT device identification information may be included with higher priority than the D2R scheduling information.

As another example, an AIoT paging message may include AIoT device identification information through a Paging ID field. The identification information of an AIoT device may support bits of various types/options. For example, typical AIoT device identification information is known to be 96 bits or 128 bits. An AIoT device permanent identifier including an ID type, a Public Land Mobile Network Identifier (PLMN) ID, a Network Identifier (NID), and a Third party ID is a maximum of 196 bits or 228 bits. Filtering information which may be used as group AIoT device identification information is obtained by adding a 3-bit filtering type to the AIoT device permanent identifier format and may have a value of 199 bits or 231 bits or less. If the bits of the Paging ID length field are 8 bits, 256 values may be distinguished, so the AIoT device identification information mentioned above may be included.

However, for applications having a value greater than the AIoT device identification information of 96 bits or 128 bits (AIoT device permanent identifier of up to 196 bits or 228 bits) (e.g., healthcare or global logistics), there is a problem that paging through the aforementioned 8-bit size is not supported. To solve this, the following methods may be considered.

For example, to support the typical AIoT device identification information of 256 bits or 496 bits (AIoT device permanent identifier of up to 356 bits or 596 bits) for applications having a value greater than the AIoT device identification information of 96 bits or 128 bits (AIoT device permanent identifier of up to 196 bits or 228 bits) (e.g., healthcare or global logistics), the Paging ID length field may be supported to have a 10-bit (or 9-bit) value.

As another example, when an AIoT paging message has an AIoT device identification information (Paging ID) size of 8 bits or more (e.g., 10 bits or 9 bits), to support forward compatibility for the paging message, it may include a Paging ID size field added to the 8-bit Paging ID size field (e.g., AIoT device identification information (Paging ID size - 8) bits). For example, if a 10-bit AIoT device identification information/Paging ID is supported in the next release/version, it may have an additional Paging ID size field of 2 bits. The additional field may be included in the field before the padding bits. For example, if a paging message used when CBRA (Contention-Based Random Access) is indicated to an AIoT device has an R2D Message Type, R2D length/transport block size, access type (e.g., CBRA), identification information associated with one AIoT service request received from the core network (transaction ID), information for indicating the presence of AIoT device identification information (Paging ID) and/or Paging ID length, Paging ID length (8 bits), AIoT device identification information (Paging ID), number of access occasions, and scheduling information for a subsequent D2R message/data of the R2D, indication information for determining a monitoring window for a Random ID Response message (K: This field indicates that the value K is 1 (when set to 0) or 4 (when set to 1) used for determining a monitor window for a Random ID Response message. The length of the field is 1 bit), and a Fill bit (This field is of variable size and may be used to pad for byte alignment (1-7 bits)), then a paging message supporting a 10-bit AIoT device identification information/Paging ID, when CBRA is indicated, has an R2D Message Type, R2D length/transport block size, access type (e.g., CBRA), identification information associated with one AIoT service request received from the core network (transaction ID), information for indicating the presence of AIoT device identification information (Paging ID) and/or Paging ID length, Paging ID length (8 bits), AIoT device identification information (Paging ID), number of access occasions, scheduling information for a subsequent D2R message/data of the R2D, indication information for determining a monitoring window for a Random ID Response message (K:), additional Paging ID size (2 bits), additional Paging ID, and a Fill bit (This field is of variable size and may be used to pad for byte alignment (1-7 bits)).

Alternatively, if a paging message used when CFA (Contention Free Access) is indicated to an AIoT device has an R2D Message Type, R2D length/transport block size, access type (e.g., CFA), Paging ID length, AIoT device identification information (Paging ID), scheduling information for a subsequent D2R message/data of the R2D, and a Fill bit (This field is of variable size and may be used to pad for byte alignment (1-7 bits)), then a paging message supporting a 10-bit AIoT device identification information/Paging ID, when CFA is indicated, has an R2D Message Type, R2D length/transport block size, access type (e.g., CFA), Paging ID length, AIoT device identification information (Paging ID), scheduling information for a subsequent D2R message/data of the R2D, additional Paging ID size (2 bits), additional Paging ID, and a Fill bit (This field is of variable size and may be used to pad for byte alignment (1-7 bits)), and an AIoT device supporting an 8-bit Paging ID length field may ignore the additional Paging ID size and additional Paging ID fields. An AIoT device supporting a 10-bit Paging ID length field may indicate a 10-bit Paging ID size using the 8-bit Paging ID length field and the additional Paging ID size bits. An AIoT device supporting a 10-bit Paging ID length field may include AIoT device identification information through the Paging ID field and the additional Paging ID field.

As another example, if information for supporting forward compatibility for the MAC PDU (e.g., protocol version/release/format type/service type version) is included in the MAC header included in the R2D/D2R MAC PDU between an AIoT device and an AIoT RAN/reader, the information may be configured with higher priority/importance over other information included in the aforementioned MAC header.

As another example, if information for supporting forward compatibility for the MAC PDU (e.g., protocol version/release/format type/service type version) is included in the MAC header included in the R2D/D2R MAC PDU between an AIoT device and an AIoT RAN/reader, the information may be configured with higher priority/importance over other information included in the aforementioned MAC header.

As another example, specific information for distinguishing the MAC PDU type (e.g., PDU-type/data type identification information/Control-PDU-type, logical channel identification information, AIoT message/service type information for the MAC PDU, total/group/multiple/single device distinction information, and/or information for indicating success/failure of reception of a D2R message/data/segment transmitted by an AIoT device) in the MAC header included in the R2D/D2R MAC PDU between an AIoT device and an AIoT RAN/reader may be configured with priority/importance over information for identifying the AIoT device, information for supporting efficient AIoT message/signaling/data transmission/reception, scheduling information, and/or information for indicating the presence of upper layer data/NAS message/container.

As another example, if specific information for identifying an AIoT device (e.g., information/field for indicating whether AIoT device identification information is included, AIoT device identification information, information for indicating whether an AS ID is included, AS ID, group device identification information, device identification information for multiple devices, and/or device identification information for a single device) is indicated in plaintext, the information/field may be configured with priority/importance over information for supporting efficient AIoT message/signaling/data transmission/reception, scheduling information, and/or information for indicating the presence of upper layer data/NAS message/container.

As another example, if specific information for identifying an AIoT device (e.g., information/field for indicating whether AIoT device identification information is included, AIoT device identification information, information for indicating whether an AS ID is included, AS ID, group device identification information, device identification information for multiple devices, and/or device identification information for a single device) is indicated with security protection/encryption, the information/field may be configured with a lower priority/less importance than information for indicating the presence of upper layer data/NAS message/container.

As another example, a paging message may include security processing parameters for an AIoT device. The position of such information may be determined. For example, authentication for an AIoT device may be performed when authentication is triggered by the network for an inventory procedure and a command procedure. For example, an AIoTF may receive a random number (e.g., 128-bit RAND) for the AIoT device generated by a corresponding core network node (e.g., AIoT Data Management, ADM) from the core network node and transmit it to a RAN/reader through an inventory request. The RAN/reader may include the random number in a paging message. As another example, to protect AIoT device identification information, a security/privacy protected temporary identifier may be used during an inventory procedure. A security/privacy protected temporary identifier may be generated based on a key (e.g., K_AIoT) shared between an AIoT device and a corresponding core network node (e.g., ADM). When using a security/privacy protected temporary identifier, an AIoTF may transmit information for indicating a (security/privacy protected) temporary identifier processing type/method to a RAN/reader through an inventory request message. Information for indicating a temporary identifier processing type/method (e.g., information for indicating a security processing type for AIoT device identification information) may indicate whether the security/privacy protected temporary identifier is a concealed type or a stored type. Alternatively, information for indicating a temporary identifier processing type/method may indicate whether the temporary identifier is a concealed type protected by a stored temporary identifier, a concealed type protected by a permanent identifier, or a stored type. And/or information for indicating a temporary identifier processing type/method may include information for indicating whether the stored T-ID type shall be updated with or without a command. A paging message may include a security/privacy protected temporary identifier and information for indicating a security/privacy protected temporary identifier processing type.

For an ultra-low complexity AIoT device, it is desirable to minimize the number of bits included in a paging message. Accordingly, it is beneficial to define the number of bits required for security parameters.

For example, by making authentication mandatory for all inventory procedures, a field for indicating the presence of a security parameter for authentication (e.g., a random number (e.g., 128-bit RAND) presence (or authentication presence)) may not be included in an R2D paging message. The paging message may typically include a security parameter for authentication (e.g., a random number (e.g., 128-bit RAND)).

As another example, authentication for an AIoT device may be performed when authentication is triggered selectively by the network. A paging message may include a field (e.g., 1 bit) for indicating the presence of a security parameter for authentication (e.g., a random number (e.g., 128-bit RAND) presence (or authentication presence)). If a security parameter for authentication is present, the field may be set to a specific value (e.g., presence 1, absence 0 or presence 0, absence 1) and the security parameter information for authentication may be included in a subsequent field.

As another example, AIoT device identification information protection/security processing may be performed selectively. A paging message may include a field (e.g., 1 bit) for indicating the presence of a security/privacy protected temporary identifier processing type/method (or whether to use a security/privacy protected temporary identifier). If protection/security processing for an AIoT device identifier is applied/performed (or if security/privacy protected temporary identifier processing type/method information is present), the field may be set to a specific value (e.g., presence 1, absence 0 or presence 0, absence 1) and the security/privacy protected temporary identifier processing type/method may be included in a subsequent field. The security/privacy protected temporary identifier processing type/method may indicate through 2 bits whether the temporary identifier is a concealed type protected by a stored temporary identifier (e.g., whether a temporary identifier is generated using a stored temporary identifier as a P0 input), a concealed type protected by a permanent identifier (e.g., whether a temporary identifier is generated using an AIoT permanent identifier as a P0 input), or a stored type. And/or the security/privacy protected temporary identifier processing type/method may include, through an additional 1 bit, information for indicating whether the stored T-ID type shall be updated with or without a command.

As another example, in a paging message, a field for indicating the presence of a security parameter for authentication (e.g., a random number presence (or authentication presence)), a security parameter for authentication, and/or a field for indicating the presence of a security/privacy protected temporary identifier processing type/method (or whether to use a security/privacy protected temporary identifier), and/or a security/privacy protected temporary identifier processing type/method field are used in the NAS layer to derive another security parameter (e.g., a result value/response value/verification value (RES), an expected result value/expected response value/expected verification value (XRES: Expected Result)) as a response when the AIoT device determines whether to respond based on the AIoT device identification information or determines to respond. In this way, since the AIoT device identification information matching needs to be processed with priority, a field for indicating the presence of a security/privacy protected temporary identifier processing type/method (or whether to use a security/privacy protected temporary identifier) and a security/privacy protected temporary identifier processing type/method field may be included after the AIoT device identification information (Paging ID) and/or information for indicating the presence of the Paging ID length, the Paging ID length (8 bits), and the AIoT device identification information (Paging ID). Alternatively, the fields may be included in the order of AIoT device identification information (Paging ID) and/or information for indicating the presence of the Paging ID length, Paging ID length (8 bits), a field for indicating the presence of a security/privacy protected temporary identifier processing type/method (or whether to use a security/privacy protected temporary identifier), a security/privacy protected temporary identifier processing type/method field, and AIoT device identification information (Paging ID).

As another example, since security processing for authentication may be performed after the AIoT device identification information matching is determined, priority processing may be applied, and the fields may be included in the order of AIoT device identification information (Paging ID) and/or information for indicating the presence of the Paging ID length, Paging ID length (8 bits), AIoT device identification information (Paging ID), a field for indicating the presence of a security/privacy protected temporary identifier processing type/method (or whether to use a security/privacy protected temporary identifier), a security/privacy protected temporary identifier processing type/method field, a field for indicating the presence of a security parameter for authentication (e.g., a random number presence (or authentication presence)), and a security parameter for authentication. Alternatively, the fields may be included in the order of AIoT device identification information (Paging ID) and/or information for indicating the presence of the Paging ID length, Paging ID length (8 bits), a field for indicating the presence of a security/privacy protected temporary identifier processing type/method (or whether to use a security/privacy protected temporary identifier), a security/privacy protected temporary identifier processing type/method field, AIoT device identification information (Paging ID), a field for indicating the presence of a security parameter for authentication (e.g., a random number presence (or authentication presence)), and a security parameter for authentication.

As another example, a paging message used when CFA (Contention Free Access) is indicated to an AIoT device may include fields in the order of Paging ID length, AIoT device identification information (Paging ID), a field for indicating the presence of a security/privacy protected temporary identifier processing type/method (or whether to use a security/privacy protected temporary identifier), a security/privacy protected temporary identifier processing type/method, a field for indicating the presence of a security parameter for authentication (e.g., a random number presence (or authentication presence)), and a security parameter for authentication field. Alternatively, the fields may be included in the order of Paging ID length, a field for indicating the presence of a security/privacy protected temporary identifier processing type/method (or whether to use a security/privacy protected temporary identifier), a security/privacy protected temporary identifier processing type/method field, AIoT device identification information (Paging ID), a field for indicating the presence of a security parameter for authentication (e.g., a random number presence (or authentication presence)), and a security parameter for authentication.

As another example, if an AS ID is included, AIoT device identification information may not be included.

Hereinafter, another embodiment of the present disclosure will be described.

When an AIoT device receives an AIoT paging message, for example, when it receives a MAC PDU including information indicating paging in the MAC layer/entity of the AIoT device, the MAC layer/entity of the AIoT device may determine a response by comparing whether there is a match between the information for indicating the device requiring a response (or AIoT device identification information) included in the AIoT paging message and the AIoT identification information stored in the AIoT device.

When an AIoT RAN/reader transmits an AIoT paging message due to one AIoT service request/trigger requested by one core network, the AIoT RAN/reader may not receive a response from the AIoT device. Accordingly, the AIoT RAN/reader may additionally transmit an AIoT paging message due to the AIoT service request/trigger. At this time, if the AIoT device transmitted a response message (e.g., AIoT message1 (MSG1)) to the paging message to the AIoT RAN/reader before receiving any additionally transmitted AIoT paging message, it is desirable to specifically define the operation of how to process the subsequently received AIoT paging message due to the AIoT service request/trigger. To support this, the following methods may be used.

For example, an AIoT RAN/reader may receive information for identifying/distinguishing one AIoT service request/trigger requested by one core network (e.g., AIoTF) (correlation/identification (e.g., correlation ID) information for one AIoT service request received from the core network) from the core network. Hereinafter, the information for identifying/distinguishing one AIoT service request/trigger requested by one core network may represent at least one piece of information for uniquely identifying an AIoT service request and the properties of the AIoT service request within one AIoTF. For example, through this information, an AIoT session between a base station/reader and an AIoTF due to an AIoT service request of an application function may be uniquely identified within one AIoTF.

When an AIoT RAN/reader receives one AIoT service request from a core network (e.g., AIoTF), it may include information for identifying/distinguishing the AIoT service request and/or the properties of the AIoT service request. The information may include at least one of AIoT service type information (e.g., inventory or command (e.g., read, write, enable, disable)), information for distinguishing an AIoT service request, information for indicating an AIoT service purpose, information for indicating retransmission-related information of the AIoT service (e.g., maximum number of times, interval/period), and AIoT device identification information.

The information for distinguishing/identifying an AIoT service request represents identification information for processing one/the same AIoT service request by one/the same core network (e.g., AIoTF) in association with paging by one or more AIoT RAN(s)/Reader(s). For example, in a paging message, it represents identification information for processing a transaction associated with information for identifying/distinguishing one AIoT service request/trigger requested by the core network (e.g., AIoTF) (correlation/identification (e.g., correlation ID) information for one AIoT service request received from the core network). This is for convenience of explanation and may be replaced by any other name such as correlation/identification information for one AIoT service request received from the core network (e.g., transaction identification information).

If one AIoTF selects one AIoT RAN/reader for one AIoT service request (e.g., inventory) and transmits one AIoT paging message to one AIoT device, the information/field may be initialized (e.g., the information is set to 0) according to the combination of the AIoT RAN/reader and the AIoT device. The AIoT RAN/reader may include the information (e.g., 0) in a paging message for indicating a response of the AIoT device and transmit it, so that the AIoT device may distinguish the core network associated with the paging and the AIoT service request. If the same AIoTF selects the same AIoT RAN/reader for another AIoT service request (e.g., command) and transmits another AIoT paging message to the same AIoT device, the information/field may be incremented by 1 (e.g., 1) according to the combination of the AIoT RAN/reader and the AIoT device. In actual operation, for the same AIoT service type, the core network may not indicate another AIoT service request for the same AIoT service type before receiving a success or failure response from the wireless network. Accordingly, for one AIoT RAN/Reader, this field may be applied as 1 bit. However, for the purpose of collecting/tracking/confirming location/proximity, paging may be performed through a plurality of (e.g., 3 or more) AIoT RANs/Readers. For example, if one AIoTF selects 3 AIoT RANs/Readers for one AIoT service request (e.g., inventory) and transmits 3 AIoT paging messages to one AIoT device, the information/field may be set to 0 for the first AIoT RAN/reader, 1 for the second AIoT RAN/reader, and 2 for the third AIoT RAN/reader, according to the combination of the AIoT RANs/Readers and the AIoT device. Therefore, since paging is performed by selecting a plurality of AIoT RANs/Readers, at least 2 bits may be applied. Each AIoT RAN/Reader may include information received from the core network in an AIoT paging message (or paging MAC PDU or paging MAC header) and send it. Alternatively, the information may be set as 1 bit indicated in a toggle (On/Off) manner when a new AIoT service request is indicated as information for distinguishing AIoT service paging according to the combination of the AIoT RAN/Reader and the AIoT device. Alternatively, it may be set as (2 bits/3 bits) combined with information for distinguishing the AIoT RAN/Reader (1 bit/2 bits) and 1 bit indicated in a toggle (On/Off) manner when a new AIoT service request is indicated to the AIoT RAN/Reader as information for distinguishing AIoT service paging according to the combination of the AIoT RAN/Reader and the AIoT device.

The information for indicating an AIoT service purpose may represent information for an AIoT device (which has successfully transmitted a response to a previous paging message triggered by the same AIoT service request by the same core network) to transmit a response without skipping the transmission of a response to the (subsequent) paging message (ignoring duplicate avoidance processing for the paging message), even if the paging is a message received redundantly because it was triggered by the same AIoT service request by the same core network. This is for convenience of description, and may be replaced by any other name such as location/proximity indication information, response indication information, or information for indicating a response without duplicate avoidance processing.

The core network may select one or more AIoT RAN(s)/Reader(s) and transmit a paging message through the AIoT RANs/Readers to increase the probability of success of a response from an AIoT device. In that case, if the AIoT device has successfully transmitted a response to a paging message received from one AIoT RAN/Reader triggered by the AIoT service request by the core network, the AIoT device may determine to skip the transmission of a response to a (subsequent) paging message received from another AIoT RAN/Reader associated with/triggered by the AIoT service request by the core network.

The core network may select one or more AIoT RAN(s)/Reader(s) and transmit a paging message through the AIoT RANs/Readers to collect/track/confirm the location/proximity of an AIoT device. In that case, even if the AIoT device has successfully transmitted a response to a paging message received from one AIoT RAN/Reader triggered by the AIoT service request by the core network, the AIoT device may determine to perform a response transmission to a (subsequent) paging message received from another AIoT RAN/Reader triggered by the AIoT service request by the core network. To indicate this, information for indicating the purpose of the AIoT service may be included. The information may be defined as 1-bit information to indicate whether the purpose is location/proximity. Alternatively, it may be defined as information of 2 bits or more to distinguish a plurality of specific purposes. Alternatively, the information may be defined as 1-bit information for instructing to transmit a response to the paging message without skipping it. Alternatively, the information may be defined as 1-bit/2-bit information for instructing the AIoT device to transmit a response regardless of a (previous) successful response to paging messages received from a plurality of AIoT RAN(s)/Reader(s) triggered by the AIoT service request by the core network.

The retransmission-related information of the AIoT service (e.g., maximum number of times and/or interval/period) represents information for indicating the maximum number of retransmissions when an AIoT RAN(s)/Reader(s) triggered by the AIoT service request by the core network transmits a paging message and fails to receive a successful response from the AIoT device, or information for indicating a time/timing to initiate retransmission of a paging message associated with the AIoT service request by the core network. The time/timing may represent the time from a previous paging message transmission to a next paging message transmission, or the time from a previous paging message transmission until a next paging message transmission after a specific timer expires when a successful response is not received until the timer expires by operating the specific timer, and the setting time of the timer.

As another example, an AIoT RAN/reader may allocate/set/generate information/identification information for the AIoT device to determine whether to skip the transmission of a response to the paging message based on information(s)/identification information(s) associated with one AIoT service request received from a core network (or information for identifying/distinguishing one AIoT service request/trigger requested by one core network) and include it in an AIoT paging message (or paging MAC PDU or paging MAC header) and send it.

As described above, an AIoT RAN/reader may receive information for identifying/distinguishing one AIoT service request/trigger requested by one core network from the core network. The information may be at least one of AIoT service type information, information for distinguishing an AIoT service request, information for indicating an AIoT service purpose, information for indicating retransmission-related information of the AIoT service (e.g., maximum number of times, interval/period), and AIoT device identification information. However, an AIoT device may not check whether a paging message retransmitted by an AIoT RAN/reader on its own has been received redundantly with only the information received from the core network. Therefore, for an AIoT device to distinguish and process redundant reception of a paging associated with the same AIoT service request by the same core network, it is necessary to include information received from the core network and/or information allocated/set/generated by the AIoT RAN/reader in a paging message and transmit it. At this time, an AIoT paging message (or paging MAC PDU or paging MAC header) may define and include a field including information received from the core network and a field allocated/set/generated by the AIoT RAN/reader as different information elements/fields. As another method, to simplify processing in an AIoT device, an AIoT paging message (or paging MAC PDU or paging MAC header) may combine information received from the core network and a field allocated/set/generated by the AIoT RAN/reader and define and include it as one information element/field. For example, it may be defined and included as the aforementioned 1-bit/2-bit received from the core network + the following 1-bit/2-bit set by the AIoT RAN/reader.

If an AIoT RAN/reader has received a response to a paging associated with the same AIoT service request by the same core network, it does not need to perform retransmission of the AIoT paging message associated with the AIoT service request. From the perspective of the AIoT RAN/reader, whether it is associated with the same AIoT service request by the same core network may be considered. A field allocated/set/generated by an AIoT RAN/reader may be initialized when a new AIoT service request from the core network is indicated for the combination of the AIoT RAN/Reader and the AIoT device. A field allocated/set/generated by an AIoT RAN/reader may be indicated as 1 bit set in a toggle (On/Off) manner when the AIoT RAN/Reader transmits/retransmits the paging MAC PDU. (or may be indicated as 2 bits incremented by 1.) Alternatively, a field allocated/set/generated by an AIoT RAN/reader may be initialized (e.g., 0) when the AIoT RAN/reader first transmits the paging MAC PDU associated with the AIoT service request of the core network, and thereafter incremented by 1 (or by 1) when retransmitting the paging MAC PDU associated with the AIoT service request of the core network.

As another example, by including an NAS message/container/parameter including specific information(s)/identification information(s) associated with the AIoT service received from a core network in a paging message, the AIoT device may indicate the NAS message/container/parameter included in the paging message to an upper layer, process it in a NAS layer/entity of the AIoT device, indicate the processed information to a MAC layer/entity, and the MAC layer/entity may determine whether to skip the transmission of a response to the paging message based on the information. Alternatively, the MAC layer/entity may determine whether to skip the transmission of a response to the paging message based on at least one of information received by the AIoT device from the NAS layer/entity and information determined/allocated/generated by an AIoT RAN/Reader and included/indicated in a paging message (or paging MAC PDU or paging MAC header).

A core network (e.g., AIoTF) may generate a message/container in the NAS layer including specific information(s)/identification information(s) associated with the AIoT service. For example, a core network (e.g., AIoTF) may include the specific information(s)/identification information(s) associated with the AIoT service through a field in an interface protocol layer (e.g., NGAP (NG Application Protocol)) message between the core network (e.g., AIoTF) and an AIoT RAN/reader. The core network (e.g., AIoTF) may transmit an NAS/NGAP message/container including the specific information(s)/identification information(s) associated with the AIoT service to the AIoT RAN/reader. The AIoT RAN/reader may include transaction identification information mapped to the specific information(s)/identification information(s) associated with the AIoT service by the core network in an AIoT paging message (or R2D MAC message) and transmit it to an AIoT device. The specific information(s)/identification information(s) associated with the AIoT service may be at least one of the aforementioned information for distinguishing the AIoT service request and the properties of the AIoT service request.

As another example, based on specific information(s)/identification information(s) associated with the AIoT service received from a core network, an AIoT RAN(s)/Reader(s) may determine/allocate/generate information/identification information for the AIoT device to determine whether to skip the transmission of a response to the paging message and include it in a paging message (or paging MAC PDU or paging MAC header) and transmit it to the AIoT device.

The information/identification information may be defined as one field (if divided into one or more fields, they may be combined to determine). Accordingly, this allows an AIoT device (which has successfully transmitted a response to a previous paging message triggered by the same AIoT service request by the same core network for a previous paging) to preferentially determine whether to transmit a response (or avoid transmission) based on the information/identification information for a (subsequent) paging message received. For example, the information/identification information may be set as 2 bits combining a bit for distinguishing the aforementioned information for indicating the purpose of the AIoT service and 1 bit which is changed and indicated in a toggle (On/Off) manner when a new AIoT service request, different from a previous AIoT service request, is indicated for the AIoT device at the AIoT RAN/reader. Alternatively, the information/identification information may be set as 3 bits combining a bit for distinguishing the aforementioned information for indicating the purpose of the AIoT service and a value within 3 bits (e.g., 2 bits) which is indicated by incrementing the value by 1 to distinguish it when a new AIoT service request, different from a previous AIoT service request, is indicated for the AIoT device at the AIoT RAN/reader. Alternatively, the information/identification information may be set as 2 bits/3 bits combining a bit for distinguishing the aforementioned information for indicating the purpose of the AIoT service and 1 bit/2 bits which is initialized (e.g., 0) when the AIoT RAN/reader first transmits the paging MAC PDU associated with the AIoT service request of the core network, and thereafter becomes 1 (or incremented by 1) when retransmitting the paging MAC PDU associated with the AIoT service request of the core network.

As another example, a MAC layer/entity may determine, at the MAC layer/entity, whether to skip the transmission of a response to the paging message based on one or more pieces of information from information received by the device from a NAS layer/entity and information determined/allocated/generated by an AIoT RAN/Reader and included/indicated in a paging message (or paging MAC PDU or paging MAC header).

As another example, duplicate avoidance processing may be performed by considering a successful response/feedback (reception/determination) to an AIoT paging (or paging MAC PDU) (previously) transmitted by an AIoT device to an AIoT RAN/reader.

An AIoT device may receive an AIoT paging (or paging MAC PDU) associated with one AIoT service request requested by one core network from an AIoT RAN/reader and check/determine whether there is a match of device identification information (or whether it is a device which should respond to the paging) using information for identifying the AIoT device included in the paging message (or paging MAC PDU) and information for identifying the AIoT device pre-configured/indicated/set/allocated/configured in the AIoT device. Through this, a device which should respond to the paging may transmit a response message to the paging (e.g., AIoT MSG1, D2R data transmission) to the AIoT RAN/reader.

If a contention-based random access type is selected by the AIoT device, AIoT MSG1 may be transmitted. If a contention-free random access type is selected, D2R data transmission may be performed. For example, at least one of a D2R upper layer (e.g., AIoT NAS or AIoT data/application) response (or acknowledgment MAC PDU or acknowledgment indication information on PDRCH) to paging and D2R data for paging may be transmitted.

If an AIoT device selects a contention-based random access type and transmits AIoT MSG1, the AIoT device may receive MSG2 from an AIoT RAN/reader. The AIoT device may perform a contention resolution operation through information included in MSG2. If the AIoT device considers contention resolution to be successful, it may distinguish and process a paging associated with the AIoT service request requested by the corresponding core network which triggers the MSG1 transmission which is subsequently received (if data transmission/reception is available/possible in the AIoT device, or if stored energy exceeds a certain level) and/or a subsequent paging by another AIoT service request different from the AIoT service request requested by the corresponding core network which triggers the MSG1 transmission which is subsequently received. For example, a device which has received a paging message including a transaction identification information associated with a specific AIoT service (inventory, command) request considers that a paging procedure associated with a previous AIoT service request has failed if the transaction identification information associated with the AIoT service request is the same as the transaction identification information associated with a previous AIoT service request stored in the device. A device which has received a paging message including a transaction identification information associated with a specific AIoT service request considers that a paging procedure associated with a previous AIoT service request was successful if the transaction identification information associated with the AIoT service request is different from the transaction identification information associated with a previous AIoT service request stored in the device. The stored transaction identification information associated with the previous AIoT service request may be released. The received transaction identification information associated with the AIoT service request may be stored/replaced.

When an AIoT device receives an AIoT paging (or paging MAC PDU) associated with one AIoT service request requested by one core network from an AIoT RAN/reader and transmits AIoT MSG1, the AIoT device may monitor the corresponding PRDCH to receive a response/acknowledgment/success/failure. The AIoT device may initialize (failure) and store a device variable for whether contention resolution was successful.

An operation to limit the time from AIoT MSG1 transmission to AIoT message2 (MSG2) reception in an AIoT device may be performed to limit energy consumption. For example, an AIoT device may start a timer after transmitting AIoT MSG1. If the timer expires, the AIoT device may consider that MSG2 reception has failed. Alternatively, PRDCH monitoring may be limited to within a certain time/duration/timing/slot/subframe/time unit after AIoT MSG1 transmission. The timer, time/duration/timing/slot/subframe/time unit may be pre-configured in the AIoT device. Alternatively, it may be configured/indicated by an AIoT RAN/reader and/or an AIoTF. For convenience of explanation, this is referred to as an MSG2 reception timer hereinafter. This is only for convenience of explanation and may be replaced by any other name such as MSG2 timer, window, duration, etc.) The timer, time/duration/timing/slot/subframe/time unit/monitoring window may represent the number of access trigger messages used by the AIoT device to determine the start of an access occasion. After the timer, time/duration/timing/slot/subframe/time unit/monitoring window, the AIoT device may not process MSG2. The AIoT device may stop monitoring for MSG2 anymore.

If an AIoT device receives an AIoT paging message associated with the AIoT service request requested by the core network after transmitting AIoT MSG1 and before receiving AIoT MSG2 (or before an MSG2 timer expires), the AIoT device may consider it as a duplicate and skip the transmission of AIoT MSG1 for it (or ignore the reception of the paging message). The AIoT device may store information for distinguishing and processing the AIoT service request requested by the core network (or a paging associated with the AIoT service request requested by the core network) as a device variable. The AIoT device may store information for identifying/distinguishing one AIoT service request/trigger requested by one core network (or at least one of information for distinguishing an AIoT service request and the properties of the AIoT service request and/or information/identification information for the AIoT RAN(s)/Reader(s) to determine whether to skip the transmission of a response to the paging message in the AIoT device) as a device variable. The AIoT device may store information/identification information which an AIoT RAN/reader has allocated/set/generated for the AIoT device to determine whether to skip the transmission of a response to the paging message based on information for identifying/distinguishing one AIoT service request/trigger requested by one core network received from the core network, as a device variable.

If an AIoT device receives a different AIoT paging message (e.g., an AIoT paging associated with a new AIoT service request different from the AIoT service request requested by the core network) after transmitting AIoT MSG1 and before receiving AIoT MSG2 (or before an MSG2 timer expires), the AIoT device may transmit another AIoT MSG1. The AIoT device may store information for distinguishing and processing the AIoT service request requested by the core network (or a paging associated with the AIoT service request requested by the core network) as a device variable. The AIoT device may store information for identifying/distinguishing one AIoT service request/trigger requested by one core network (or at least one of information for distinguishing an AIoT service request and the properties of the AIoT service request and/or information/identification information for the AIoT RAN(s)/Reader(s) to determine whether to skip the transmission of a response to the paging message in the AIoT device) as a device variable. The AIoT device may store information/identification information which an AIoT RAN/reader has allocated/set/generated for the AIoT device to determine whether to skip the transmission of a response to the paging message based on information for identifying/-distinguishing one AIoT service request/trigger requested by one core network received from the core network, as a device variable.

If an AIoT device receives AIoT MSG2 (e.g., if an AIoT device receives AIoT MSG2 including the same random ID as the random ID previously transmitted in AIoT MSG1, or if an AIoT device receives AIoT MSG2 including the same random ID as the random ID previously transmitted in AIoT MSG1 before an MSG2 reception timer expires), the AIoT device may perform at least one of the following operations. The order of the following operations is an example, and may be performed in any order different from the following order.

The AIoT device may consider that contention resolution is successful.

The AIoT device may set a device variable for whether contention resolution was successful to success and store it.

The AIoT device may store the random ID.

When an AIoT device receives an AIoT paging (or paging MAC PDU) associated with one AIoT service request requested by one core network from an AIoT RAN/reader, the AIoT device may check whether the paging is a duplicate paging based on information included in the paging message (or paging MAC PDU or paging MAC header or NAS container/message included in the paging PDU) and a device variable. For example, the paging message may be considered a duplicate paging if information transmitted by an AIoT RAN/reader included in a paging message (or paging MAC PDU or paging MAC header) using at least one of information(s)/identification information(s) associated with one AIoT service request received from a core network (or information for identifying/distinguishing one AIoT service request/trigger requested by one core network) and information/identification information for an AIoT RAN/reader to determine whether to skip the transmission of a response to the paging message is the same as the value of a stored/set device variable and/or if a device variable for whether the same contention resolution was successful is stored as success.

If an AIoT device has received AIoT MSG2 (or if it has successfully received AIoT MSG2, or if contention resolution is considered successful), if the AIoT device receives a duplicate paging message associated with one AIoT service request/trigger requested by one core network, the AIoT device may skip a response to the paging. The AIoT device may discard/discard/delete/remove the paging message (or paging MAC PDU). The AIoT device may terminate the paging message (or paging MAC PDU) reception procedure.

When an AIoT RAN/reader transmits any R2D message (e.g., AIoT paging, AIoT MSG2, or R2D data transmission) to an AIoT device, the AIoT device may not receive the R2D message. Accordingly, the AIoT RAN/reader may not receive an expected response/subsequent D2R message from the AIoT device.

Even if an AIoT RAN/reader transmits any R2D message (e.g., AIoT paging, AIoT MSG2, or R2D data transmission) to an AIoT device, the AIoT device receives the R2D message, and the AIoT device transmits a response/subsequent D2R message (e.g., AIoT MSG1, AIoT MSG3, or D2R data transmission) to the R2D message to the AIoT RAN/reader, the AIoT RAN/reader may not receive the expected response/subsequent D2R message from the AIoT device (due to a problem on the D2R wireless link, etc.).

If an AIoT RAN/reader determines/judges/confirms/recognizes a failure to receive an expected response/subsequent D2R message, by transmitting the indication information through the R2D message (or the R2D message MAC PDU or the R2D message MAC header or a dedicated MAC PDU/CE for indicating the R2D message failure), the AIoT device may easily process a subsequent AIoT device operation. Alternatively, the AIoT device may easily transmit an expected response/subsequent D2R message from the AIoT RAN/reader. This may alleviate the burden of the AIoT RAN/reader having to newly start/restart the AIoT service procedure through a paging associated with the AIoT service request, or the AIoT device having to perform access/re-access from the beginning.

For example, if an AIoT RAN/reader fails to receive AIoT message3 (MSG3), the AIoT RAN/reader may explicitly/implicitly indicate information for indicating the failure to receive MSG3, so that the AIoT device may transmit AIoT MSG3. Alternatively, the AIoT device may consider that the procedure associated with the stored identification information has failed. The stored AS ID may be released.

For example, an R2D MAC PDU/CE for indicating successful reception of AIoT MSG3 and an R2D MAC PDU/CE for indicating failed reception of AIoT MSG3 may be defined separately.

As another example, a (dedicated) R2D MAC PDU/CE for indicating failed reception of AIoT MSG3 may be defined. The MAC PDU/CE may be distinguished through at least one of information for distinguishing the MAC PDU/CE in the MAC header, information for distinguishing the MAC PDU/CE format, information for distinguishing that the MAC PDU/CE is a MAC PDU/CE for indicating failed reception of AIoT MSG3, logical channel identification information included in the MAC PDU/CE, PDU-type/data type identification information/Control-PDU-type included in the MAC PDU/CE, and service type information included in the MAC PDU.

As another example, AIoT MSG2 may be used as an R2D MAC PDU for indicating failed reception of AIoT MSG3. An AIoT MSG2 MAC PDU may include at least one of a 16-bit random ID received from an AIoT device via AIoT MSG1, D2R access occasion/resource/frequency resource/scheduling information, and an AS ID allocated by an AIoT RAN/-reader used for D2R scheduling (and/or R2D reception).

As another example, a (dedicated) R2D MAC PDU/CE for indicating failed reception of AIoT MSG3 or an AIoT MSG2 MAC PDU/CE for indicating failed reception of AIoT MSG3 may include (1-bit) information/a field for indicating whether AIoT MSG3 reception failed in the MAC PDU (or the MAC PDU header).

As another example, when an AIoT device receives the R2D message, if based on the MAC PDU header information, the MAC PDU is an AIoT MSG2 MAC PDU, and the random ID included in the AIoT MSG2 MAC PDU has the same value as the 16-bit random ID transmitted by the AIoT device via AIoT MSG1, or the AS ID included in the AIoT MSG2 MAC PDU has the same value as the AS ID received by the AIoT device via a paging message (or paging MAC PDU or paging MAC header), and/or if the AS ID included in the AIoT MSG2 MAC PDU has the same value as the AS ID via an R2D message from the AIoT device, the AIoT device may consider the AIoT MSG2 as an AIoT MSG2 for the AIoT device and receive it.

(For this purpose) An AIoT device may store an AS ID as a device variable when receiving it via a paging message (or paging MAC PDU or paging MAC header)/R2D message. If the device variable is stored with a different value, it may be replaced.

(For this purpose) An AIoT device may store a random ID as a device variable when generating it or when transmitting AIoT MSG1. If the device variable is stored with a different value, it may be replaced.

A random ID and/or an AS ID may be stored for each piece of information for distinguishing a paging associated with the IoT service request (or along with/in association with the information). Alternatively, a random ID and/or an AS ID may be stored regardless of the information for distinguishing a paging associated with the IoT service request.

As another example, when using AIoT MSG2 as an R2D MAC PDU for indicating failed reception of AIoT MSG3, the MAC PDU may not include upper layer data (or an upper layer data field (e.g., a dedicated AIoT NAS container field)). The MAC PDU header may not include a field indicating whether upper layer data is included. Alternatively, the MAC PDU header may indicate that the AIoT MSG2 indicates failed reception of AIoT MSG3 through a field indicating whether upper layer data is included.

As another example, when a failure to receive AIoT MSG3 occurs, considering the (energy) unavailability of an AIoT device, the AIoT device may effectively handle the failure of the AIoT RAN/reader to receive AIoT MSG3. A dedicated R2D MAC PDU (or indication information in an R2D MAC PDU) for indicating failure of AIoT MSG3 reception may be defined.

When an AIoT device receives an R2D MAC PDU (or indication information in an R2D MAC PDU) for indicating failure of an AIoT RAN/reader to receive AIoT MSG3, an R2D MAC PDU (or indication information in an R2D MAC PDU) for supporting an effective operation when a temporarily/short-term stored device variable/status information/counter/timer in the AIoT device is lost may be defined/used.

When an AIoT device transmits AIoT MSG1 as a response to a received paging message (or after transmitting it), the AIoT device may enter an unavailable state where AIoT signaling/message/data transmission/reception is impossible (for any reason such as energy depletion). In this case, an AS ID received by the AIoT device from an AIoT RAN/reader and/or a random ID generated by the AIoT device (or their stored device variables) may be deleted/removed/discarded/lost/released. In this case, even if the AIoT RAN/reader retransmits AIoT MSG2, the AIoT device may not recognize/confirm/consider that the message was transmitted to the AIoT device. Even if the AIoT RAN/reader retransmits AIoT MSG2, the AIoT RAN/reader may not receive a response to the AIoT service. The AIoT RAN/reader may not receive a response to the AIoT service until the AIoT RAN/reader transmits an AIoT paging message again.

An R2D MAC PDU for indicating failure to receive AIoT MSG3 may include at least one of a 16-bit random ID received from an AIoT device via AIoT MSG1 included in AIoT MSG2, D2R access occasion/resource/frequency resource/scheduling information, and an AS ID allocated by an AIoT RAN/reader used for D2R scheduling (and/or R2D reception). Furthermore, the R2D MAC PDU for indicating failure to receive AIoT MSG3 may include AIoT device identification information (or any information stored in the non-volatile memory of the AIoT device). The information may include the same information/field as the AIoT device identification information included in an AIoT paging message (or paging MAC PDU or paging MAC header).

An R2D MAC PDU for indicating failure to receive AIoT MSG3 may include at least one of information/a field for indicating whether AIoT device identification information is included, information for indicating whether an AS ID is included, and an AS ID.

An AIoT RAN/reader may not include AIoT device identification information when first transmitting an AIoT MSG2 MAC PDU upon receiving AIoT MSG1. Thereafter, if the AIoT RAN/reader determines/judges/confirms/recognizes a failure to receive AIoT MSG3, it may include AIoT device identification information when subsequently transmitting/retransmitting an AIoT MSG2 MAC PDU.

An R2D MAC PDU for indicating failure to receive AIoT MSG3 may have a MAC PDU format different from an AIoT MSG2 which does not include AIoT device identification information. For example, it may be distinguished through at least one of information for distinguishing the MAC PDU in the MAC header, information for distinguishing the MAC PDU format, logical channel identification information included in the MAC PDU, PDU-type/data type identification information/Control-PDU-type included in the MAC PDU, and service type information included in the MAC PDU. As another method, an R2D MAC PDU for indicating failure to receive AIoT MSG3 may include information for indicating whether AIoT device identification information is included.

When an AIoT device receives the R2D message, if based on the MAC PDU header information, the MAC PDU is an AIoT MSG2 MAC PDU (or an R2D MAC PDU for indicating failure to receive AIoT MSG3), and the AIoT device identification information included in the AIoT MSG2 MAC PDU matches the AIoT device identification information of the AIoT device, the AIoT device may consider the AIoT MSG2 (or the R2D MAC PDU for indicating failure to receive AIoT MSG3) as a MAC PDU for the AIoT device and receive it. If an AS ID is received, the AIoT device may store the received AS ID as a device variable. If the device variable is stored with a different value, it may be replaced.

As another example, information/a field for indicating whether AIoT MSG3 reception failed may be included in a paging message (or paging MAC PDU or paging MAC header).

As another example, one or more pieces of information included in a paging message may be included in a MAC PDU (or MAC header) for indicating failure to receive AIoT MSG3.

This operation allows an AIoT device to effectively perform an AIoT AS procedure by falling back to the operation for transmitting MSG1 when it enters an unavailable state.

Even when an AIoT device is in an available state, if it receives an R2D MAC PDU having a different value from a device variable stored in the AIoT device, the AIoT device may perform an operation for transmitting MSG1 and transmit AIoT MSG1. If an AIoT device is in an available state and receives an R2D MAC PDU having the same value as a device variable stored in the AIoT device, the AIoT device may perform a subsequent D2R data transmission according to the information included in the R2D MAC PDU.

A paging MAC PDU including information (or with the information set) for indicating whether AIoT MSG3 reception failed may have a different MAC PDU format from a paging MAC PDU which does not include information (or with the information not set) for indicating whether AIoT MSG3 reception failed. For example, the paging MAC PDU may be distinguished through at least one of information for distinguishing the MAC PDU in the MAC header, information for distinguishing the MAC PDU format, logical channel identification information included in the MAC PDU, PDU-type/data type identification information/Control-PDU-type included in the MAC PDU, and service type information included in the MAC PDU. Alternatively, it may not include at least one piece of information/field included in a paging message associated with an AIoT service request in the MAC header. As another method, a paging MAC PDU including information (or with the information set) for indicating failure to receive AIoT MSG3 may include information for indicating whether information for indicating failure to receive AIoT MSG3 is included.

As another example, if an AIoT RAN/reader succeeds in receiving AIoT MSG3, the AIoT RAN/reader may explicitly/implicitly indicate information for indicating successful reception of MSG3, so that an AIoT device may effectively perform an operation to be processed in the AIoT device (based on information indicated by the AIoT RAN/reader) after successful AIoT MSG3.

For example, an R2D MAC PDU/CE for indicating successful reception of AIoT MSG3 (or for indicating successful reception of a recent/previous D2R message/signaling/data transmitted from an AIoT device, hereinafter referred to as an R2D MAC PDU for indicating successful reception of AIoT MSG3 for convenience of explanation. This is for convenience of description, and an R2D MAC PDU for indicating successful reception of a recent/previous D2R message/signaling/data transmitted from an AIoT device is also included in the present disclosure.) may be defined. The MAC PDU/CE may be distinguished through at least one of information for distinguishing the MAC PDU/CE in the MAC header, information for distinguishing the MAC PDU/CE format, information for distinguishing that the MAC PDU/CE is a MAC PDU/CE for indicating successful reception of AIoT MSG3, logical channel identification information included in the MAC PDU/CE, PDU-type/data type identification information/Control-PDU-type included in the MAC PDU/CE, and service type information included in the MAC PDU/CE.

As another example, an R2D MAC PDU for indicating successful reception of AIoT MSG3 may have a fixed size.

As another example, an R2D MAC PDU for indicating successful reception of AIoT MSG3 may include at least one of a 16-bit random ID received from an AIoT device via AIoT MSG1, an AS ID allocated by an AIoT RAN/reader used for D2R scheduling (and/or R2D reception), D2R access occasion/resource/frequency resource/scheduling information, information for indicating the presence of remaining/to-be-transmitted/subsequent D2R data/segments, subsequent D2R access occasion/resource/frequency resource/scheduling information for remaining/to-be-transmitted/subsequent D2R data/segments, and information for indicating the presence of remaining/to-be-transmitted R2D data.

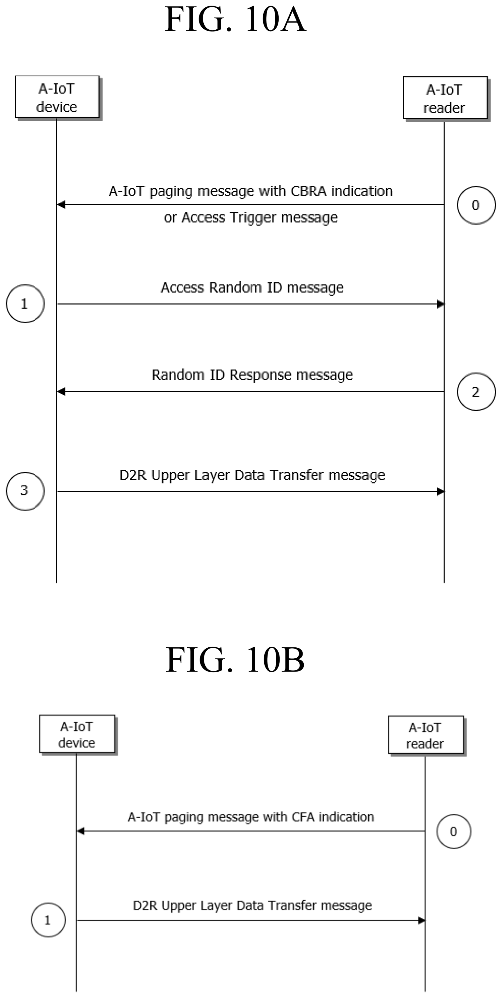

**FIGS. 10A to 10B illustrate A-IoT access procedures to which one embodiment of the present specification may be applied.**

The main services and functions of the A-IoT MAC layer are as follows:

- Paging;
- Access;
- Transfer of upper layer data;
- Construct MAC PDUs to be mapped onto D2R transport blocks and delivered to the physical layer;

- MAC padding;
- D2R segmentation;
- Process MAC PDUs from R2D transport blocks delivered from the physical layer;
- Failure detection.

A-IoT Paging

A-IoT paging allows an A-IoT reader to trigger A-IoT CBRA or A-IoT CFA for one, multiple, or all A-IoT devices. The A-IoT paging message is transmitted on the PRDCH. An A-IoT paging message may include zero or one paging identifier. The paging identifier may be an A-IoT Device Permanent Identifier or filtering information. If the paging identifier is included, the paging message is transmitted to a specific A-IoT device or a group of A-IoT devices. If the paging identifier is not included, the paging message is transmitted to all A-IoT devices. Additionally, the A-IoT paging message provides configuration for the A-IoT access procedure.

A-IoT Access Procedure

For A-IoT access, both an A-IoT contention-based random access (CBRA) procedure and an A-IoT contention-free access (CFA) procedure are supported. When an A-IoT device is paged, the A-IoT device initiates one of the A-IoT CBRA procedure or the A-IoT CFA procedure according to an explicit instruction included in an A-IoT paging message.

In the case of CBRA (FIG. 10A), the A-IoT device randomly selects one access occasion among access occasions configured in the A-IoT paging message. In order to determine the start of the selected access occasion, the A-IoT device may monitor an Access Trigger message, and transmits an A-IoT MSG1 (Access Random ID message) in the selected access occasion. The start of a first A-IoT MSG1 resource set is directly indicated by the A-IoT paging message instead of the Access Trigger message.

After transmitting the A-IoT MSG1, the A-IoT device monitors an A-IoT MSG2 (Random ID Response message) until a configured number of Access Trigger messages or a subsequent A-IoT paging message is received. That is, any A-IoT MSG2 received thereafter is not processed.

When the A-IoT MSG2 includes a frequency index (if present) matching the frequency index used for the MSG1 transmission and includes the same Random ID as transmitted in the MSG1, the A-IoT device considers that contention resolution is successful. Otherwise, the A-IoT device considers that contention resolution has failed. When the contention resolution is successful, the device transmits a D2R Upper Layer Data Transfer message using resources provided in the A-IoT MSG2. When the contention resolution fails, if an A-IoT paging message having the same transaction ID is received, the A-IoT device performs re-access.

In the case of CFA (FIG. 10B), the A-IoT device transmits the D2R Upper Layer Data Transfer message using a dedicated resource provided in the A-IoT paging message. In this case, monitoring of the Access Trigger message is not required.

According to an embodiment, an A-IoT device in a wireless communication system receives a first MAC message for paging, and after receiving the first MAC message, transmits a second MAC message including device to reader (D2R) upper layer data. Further, after transmitting the second MAC message, the device receives a third MAC message including reader to device (R2D) upper layer data. Here, the first MAC message includes device identification information and information indicating presence of the device identification information, and the third MAC message includes information indicating presence of the R2D upper layer data.

The first MAC message may further include D2R scheduling information. Here, the first MAC message may include, in an order, information indicating presence of the device identification information, the device identification information, and the D2R scheduling information.

The first MAC message may further include a security parameter and information indicating presence of the security parameter. Here, the first MAC message may include, in an order, the information indicating presence of the security parameter, the security parameter, the information indicating presence of the device identification information, and the device identification information.

The information indicating presence of the R2D upper layer data may be 1 bit. Further, the third MAC message may have different MAC protocol data unit (PDU) formats according to a setting value of the information indicating presence of the R2D upper layer data.

Meanwhile, the third MAC message may further include an access stratum identifier (AS ID) and D2R scheduling information. Here, the third MAC message may include, in an order, the AS ID, the D2R scheduling information, the information indicating presence of the R2D upper layer data, and the R2D upper layer data.

At least one of the first MAC message and the third MAC message may further include transport block size information. Here, the transport block size information may be 7 bits.

The embodiments described up to now may be implemented through various means. For example, the embodiments may be implemented by hardware, firmware, software, or a combination thereof. Details will be described with reference to the accompanying drawings.

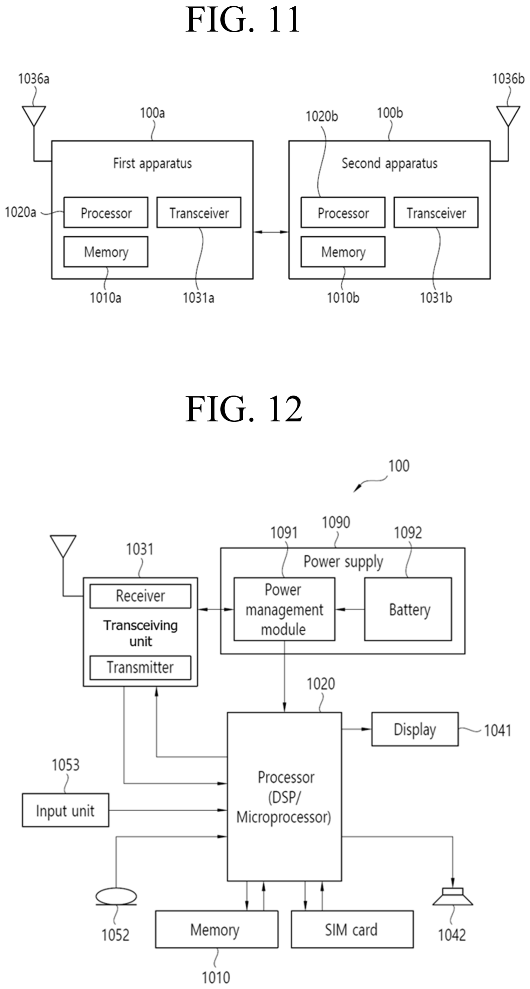

**FIG. 11 is a block diagram showing apparatuses according to an embodiment of the disclosure.**

Referring to FIG. 11, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medical apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medical apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a and configured to store various types of information and/or instructions. The transceiver 1031a may be connected to the processor 1020a and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 12 is a block diagram showing a terminal according to an embodiment of the disclosure.**

In particular, FIG. 12 illustrates the previously described apparatus of FIG. 11 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some constituent elements are referred to as a unit in the disclosure. However, the embodiments are not limited thereto. For example, such term "unit" may also refers to a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel®, KIRIN™ series of processors made by HiSilicon®, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

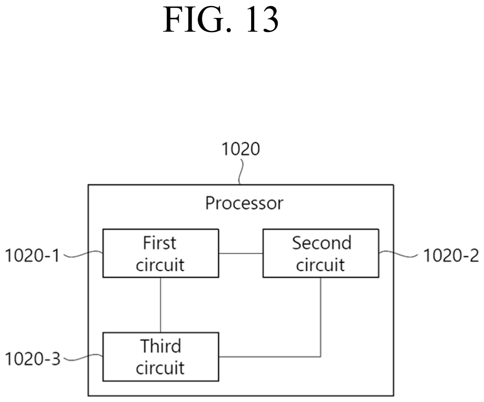

**FIG. 13 is a block diagram of a processor in accordance with an embodiment.**

Referring to FIG. 13, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

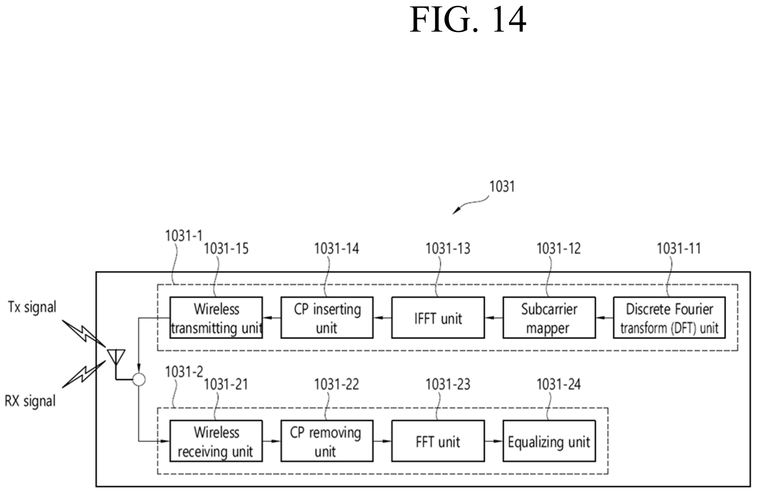

**FIG. 14 is a detailed block diagram of a transceiver of a first apparatus shown in FIG. 11 or a transceiving unit of an apparatus shown in FIG. 12.**

Referring to FIG. 14, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some constituent elements are referred to as a unit in the disclosure. However, the embodiments are not limited thereto. For example, such term "unit" may also refer to a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, a device in a wireless communication system may efficiently process medium access control (MAC) messages for data transmission and reception with a radio access network (RAN) or a reader..

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

**Claims**

1. A method for processing a medium access control (MAC) message of a device in a wireless communication system, the method comprising:

   receiving a first MAC message for paging;
   after receiving the first MAC message, transmitting a second MAC message including device to reader (D2R) upper layer data; and
   after transmitting the second MAC message, receiving a third MAC message including reader to device (R2D) upper layer data,
   wherein the first MAC message includes i) device identification information and ii) information indicating a presence of the device identification information, and
   wherein the third MAC message includes information indicating a presence of the R2D upper layer data.

2. The method of claim 1, wherein the first MAC message further includes D2R scheduling information, and
   wherein the first MAC message includes, in an order, the information indicating a presence of the device identification information, the device identification information, and the D2R scheduling information.

3. The method of claim 1, wherein the first MAC message further includes a security parameter and information indicating a presence of the security parameter, and
   wherein the first MAC message includes, in an order, the information indicating a presence of the security parameter, the security parameter, the information indicating a presence of the device identification information, and the device identification information.

4. The method of claim 1, wherein the information indicating a presence of the R2D upper layer data is 1 bit.

5. The method of claim 1, wherein the third MAC message has different MAC protocol data unit (PDU) formats according to a setting value of the information indicating a presence of the R2D upper layer data.

6. The method of claim 1, wherein the third MAC message further includes an access stratum Identifier (AS ID) and D2R scheduling information, and

wherein the third MAC message includes, in an order, the AS ID, the D2R scheduling information, the information indicating a presence of the R2D upper layer data, and the R2D upper layer data.

7.  The method of claim 1, wherein at least one of the first MAC message and the third MAC message further includes transport block size information, and
    wherein the transport block size information is 7 bits.

8.  A device in a wireless communication system, comprising:

    at least one processor; and
    at least one memory configured to store instructions and operably electrically connectable to the at least one processor,
    wherein operations performed based on the instructions executed by the at least one processor comprise:

    receiving a first MAC message for paging;
    after receiving the first MAC message, transmitting a second MAC message including device to reader (D2R) upper layer data; and
    after transmitting the second MAC message, receiving a third MAC message including reader to device (R2D) upper layer data,
    wherein the first MAC message includes device identification information and information indicating a presence of the device identification information, and
    wherein the third MAC message includes information indicating a presence of the R2D upper layer data.

9.  The device of claim 8, wherein the first MAC message further includes D2R scheduling information, and
    wherein the first MAC message includes, in an order, the information indicating a presence of the device identification information, the device identification information, and the D2R scheduling information.

10. The device of claim 8, wherein the first MAC message further includes a security parameter and information indicating a presence of the security parameter, and
    wherein the first MAC message includes, in an order, the information indicating a presence of the security parameter, the security parameter, the information indicating a presence of the device identification information, and the device identification information.

11. The device of claim 8, wherein the information indicating a presence of the R2D upper layer data is 1 bit.

12. The device of claim 8, wherein the third MAC message has different MAC protocol data unit (PDU) formats according to a setting value of the information indicating a presence of the R2D upper layer data.

13. The device of claim 8, wherein the third MAC message further includes an access stratum Identifier (AS ID) and D2R scheduling information, and
    wherein the third MAC message includes, in an order, the AS ID, the D2R scheduling information, the information indicating a presence of the R2D upper layer data, and the R2D upper layer data.

14. The device of claim 8, wherein at least one of the first MAC message and the third MAC message further includes transport block size information, and
    wherein the transport block size information is 7 bits.

# FIG. 1

# FIG. 2

# FIG. 3A

# FIG. 3B

# FIG. 3C

# FIG. 4

# FIG. 5

# FIG. 6

# FIG. 7A

Ambient IoT data/signaling

BS

Ambient IoT device

# FIG. 7B

Ambient IoT data/signaling

BS

Uu

intermediate node

Ambient IoT device

# FIG. 8

# FIG. 9

# FIG. 10A

# FIG. 10B

# FIG. 11

1036a

100a

1020a

First apparatus

Processor    Transceiver

Memory

1010a    1031a

1020b    100b

Second apparatus

Processor    Transceiver

Memory

1010b    1031b

1036b

# FIG. 12

100

1091    1090    1092

Power supply

1031

Receiver

Transceiving
unit

Transmitter

Power
management
module

Battery

1020

Processor
(DSP/
Microprocessor)

Display    1041

1053

Input unit

1052

Memory

SIM card

1042

1010

# FIG. 13

1020

Processor

1020-1 — First circuit

Second circuit — 1020-2

1020-3 — Third circuit

# FIG. 14

Europäisches
Patentamt

European
Patent Office

Office européen
des brevets

## EUROPEAN SEARCH REPORT

**Application Number**

EP 26 15 0005

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NATHAN TENNY ET AL: "Procedures and signalling for ambient IoT paging", 3GPP DRAFT; R2-2406655; TYPE DISCUSSION; FS_AMBIENT_IOT_SOLUTIONS 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Maastricht, NL; 20240819 - 20240823, 8 August 2024 (2024-08-08), XP052638830, [retrieved on 2024-08-08] * figures 1,2 * * section 2.2 * * section 2.4 * | 1-14 | INV. H04L69/22 H04L69/324 H04W4/70 H04W68/00 H04W80/02 H04W72/23 |
| Y | WO 2024/164168 A1 (GUANGDONG OPPO MOBILE TELECOMMUNICATIONS CORP LTD [CN]) 15 August 2024 (2024-08-15) * the whole document * & EP 4 665 026 A1 (GUANGDONG OPPO MOBILE TELECOMMUNICATIONS CORP LTD [CN]) 17 December 2025 (2025-12-17) * paragraph [0162] - paragraph [0163] * | 1-14 | |
| Y | YIRU KUANG ET AL: "A-IoT random access procedure", 3GPP DRAFT; R2-2410351; TYPE DISCUSSION; FS_AMBIENT_IOT_SOLUTIONS 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Orlando, US; 20241118 - 20241122, 8 November 2024 (2024-11-08), XP052671551, [retrieved on 2024-11-08] * section 2.3 * | 1-14 | |

**TECHNICAL FIELDS SEARCHED (IPC)**

H04L
H04W

The present search report has been drawn up for all claims

| Place of search | Date of completion of the search | Examiner |
|---|---|---|
| The Hague | 19 March 2026 | Cuevas Casado, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 0005

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2026

| Patent document cited in search report | Publication date | Patent family member(s) | | Publication date |
|---|---|---|---|---|
| WO 2024164168 A1 | 15-08-2024 | CN | 120642499 A | 12-09-2025 |
| | | EP | 4665026 A1 | 17-12-2025 |
| | | JP | 2026506544 A | 25-02-2026 |
| | | KR | 20250142399 A | 30-09-2025 |
| | | US | 2025358788 A1 | 20-11-2025 |
| | | WO | 2024164168 A1 | 15-08-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020250000562
- KR 1020250128648

- KR 1020250203375